(19) **Europäisches Patentamt / European Patent Office / Office européen des brevets**

(11) **EP 4 787 849 A1**

(12) **EUROPEAN PATENT APPLICATION**
published in accordance with Art. 153(4) EPC

(43) Date of publication:
05.08.2026 Bulletin 2026/32

(21) Application number: 24881579.7

(22) Date of filing: 22.10.2024

(51) International Patent Classification (IPC):
**H04N 19/42** (2014.01)

(52) Cooperative Patent Classification (CPC):
**G06T 9/00; H04N 19/186; H04N 19/42**

(86) International application number:
**PCT/CN2024/126316**

(87) International publication number:
**WO 2025/087214 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 25.10.2023 CN 202311395694

(71) Applicant: HUAWEI TECHNOLOGIES CO., LTD.
Shenzhen 518129 (CN)

(72) Inventors:
• ZHANG, Shifeng
Shenzhen, Guangdong 518129 (CN)
• XIE, Jiyang
Shenzhen, Guangdong 518129 (CN)
• ZHAO, Yin
Shenzhen, Guangdong 518129 (CN)

(74) Representative: **Isarpatent**
**Patent- und Rechtsanwälte Part G mbB**
**Friedrichstrasse 31**
**80801 München (DE)**

(54) **DECODER, ENCODER, IMAGE ENCODING METHOD, IMAGE DECODING METHOD AND STORAGE MEDIUM**

(57) This application discloses a decoder, an encoder, an image encoding method, an image decoding method, and a storage medium, and belongs to the field of encoding and decoding technologies. The decoder includes a first decoder network, a hyper-decoder network, and a context network, the first decoder network includes a first subnetwork, a second subnetwork, a third subnetwork, and a fourth subnetwork that are sequentially connected from an input to an output, a channel quantity of an input tensor of the fourth subnetwork is greater than a channel quantity of an input tensor of the third subnetwork, and the channel quantity of the input tensor of the fourth subnetwork is greater than a channel quantity of an input tensor of the second subnetwork. In this application, with reference to a structure of the first decoder network, the channel quantity of the input tensor of the fourth subnetwork is set to be greater than the channel quantity of the input tensor of the third subnetwork and the channel quantity of the input tensor of the second subnetwork. This can reduce computational complexity of the first decoder network, and further, can ensure that quality of an image reconstructed by the first decoder network is not clearly reduced.

FIG. 9

901 Input a to-be-encoded image into a first encoder network, to obtain a feature map

902 Input the feature map into a first hyper-encoder network, to obtain a hyper-prior feature

903 Encode the hyper-prior feature and the feature map into a bitstream through a hyper-decoder network and a context network

## Description

This application claims priority to Chinese Patent Application No. 202311395694.9, filed on October 25, 2023 and entitled "DECODER, ENCODER, IMAGE ENCODING METHOD, IMAGE DECODING METHOD, AND STORAGE MEDIUM", which is incorporated herein by reference in its entirety.

## TECHNICAL FIELD

This application relates to the field of encoding and decoding technologies, and in particular, to a decoder, an encoder, an image encoding method, an image decoding method, and a storage medium.

## BACKGROUND

As a deep learning technology is widely applied to fields such as image recognition and object detection, the deep learning technology is also applied to an image compression task. In other words, encoder and decoder networks constructed based on the deep learning technology are introduced to implement image compression. Using the encoder and decoder networks to perform image compression can greatly improve encoding and decoding performance and image compression effect, but also introduces a huge computation amount. Therefore, how to construct the encoder and decoder networks to reduce a computation amount becomes one of current concerns.

## SUMMARY

This application provides a decoder, an encoder, an image encoding method, an image decoding method, and a storage medium, to reduce a computation amount of decoding. The technical solutions are as follows.

According to a first aspect, a decoder is provided. The decoder includes a first decoder network, a hyper-decoder network, and a context network, the first decoder network includes a first subnetwork, a second subnetwork, a third subnetwork, and a fourth subnetwork that are sequentially connected from an input to an output, a channel quantity of an input tensor of the fourth subnetwork is greater than a channel quantity of an input tensor of the third subnetwork, and the channel quantity of the input tensor of the fourth subnetwork is greater than a channel quantity of an input tensor of the second subnetwork.

The fourth subnetwork is close to the output of the first decoder network, a computation amount of the fourth subnetwork is usually represented by a product of the channel quantity of the input tensor of the fourth subnetwork and a channel quantity of an output tensor of the first decoder network, and the channel quantity of the output tensor of the first decoder network is usually very small. Therefore, the channel quantity of the input tensor of the fourth subnetwork is set to be larger. In this way, an increase in the computation amount is not very large. The first subnetwork is close to the input of the first decoder network, a computation amount of the first subnetwork is usually represented by a product of a channel quantity of an input tensor of the first decoder network and a channel quantity of an output tensor of the first subnetwork, and the channel quantity of the input tensor of the first decoder network is usually very large. Therefore, the channel quantity of the output tensor of the first subnetwork is set to be smaller. In this way, the computation amount of the first subnetwork can be reduced. Similarly, a computation amount of the second subnetwork located in the middle is usually represented by a product of the channel quantity of the input tensor of the second subnetwork and a channel quantity of an output tensor of the second subnetwork. Usually, a computation amount of an intermediate process is large. Therefore, the channel quantity of the output tensor of the second subnetwork is set to be smaller. In other words, the channel quantity of the input tensor of the third subnetwork is set to be smaller. In this way, the computation amount of the intermediate process is reduced.

In other words, with reference to a structure of the first decoder network, the channel quantity of the input tensor of the fourth subnetwork is set to be greater than the channel quantity of the input tensor of the third subnetwork and the channel quantity of the input tensor of the second subnetwork. In other words, a channel quantity of a tensor close to an input side of the first decoder network is set to be smaller, and a channel quantity of a tensor close to an output side of the first decoder network is set to be larger. In this way, computational complexity of the first decoder network can be reduced. Further, it can be ensured that quality of an image reconstructed by the first decoder network is not clearly reduced, and a problem that computational complexity of the first decoder network is high when a channel quantity of a tensor close to an input layer of the first decoder network is large and the channel quantity of the tensor close to the output side of the first decoder network is small is avoided.

In a JPEG AI compression model, color component separation needs to be performed on an image. To be specific, a to-be-encoded image is separated into an image of a Y component and an image of UV components. In this way, the first decoder network may decode data of the Y component, and may further decode data of the UV components. When the first decoder network is configured to decode the data of the Y component, the channel quantity of the input tensor of the fourth subnetwork is 96, and the channel quantity of the input tensor of the third subnetwork and the channel quantity of the input tensor of the second subnetwork each are 64. When the first decoder network is configured to decode the data of the UV components, the channel quantity of the input tensor of the fourth subnetwork is 128, and the channel quantity of the input tensor of the third subnetwork and the channel quantity of the input tensor of the second subnetwork each are 64.

The foregoing merely provides an example. In some other embodiments, another value may be set, provided that it is ensured that the channel quantity of the tensor close to the input side of the first decoder network is smaller, and the channel quantity of the tensor close to the output side of the first decoder network is larger. For example, when the first decoder network is configured to decode the data of the Y component, the channel quantity of the input tensor of the fourth subnetwork is 96, and the channel quantity of the input tensor of the third subnetwork and the channel quantity of the input tensor of the second subnetwork each are 64. When the first decoder network is configured to decode the data of the UV components, the channel quantity of the input tensor of the fourth subnetwork is 96, and the channel quantity of the input tensor of the third subnetwork and the channel quantity of the input tensor of the second subnetwork each are 64. That is, a same channel quantity as that of the Y component may be used for the UV components, so that a parameter configuration process of the first decoder network is simpler.

Optionally, at least two of the first subnetwork, the second subnetwork, and the third subnetwork include a residual activation unit, the residual activation unit includes an activation layer, and activation layers in the at least two subnetworks are different. In this way, activation layers with different flexibility may be selected according to different requirements, to avoid a problem caused in a case of a same activation layer in a data processing process of the first decoder network.

Optionally, the first decoder network is configured to decode data of a Y component, the first subnetwork, the second subnetwork, and the third subnetwork each include the residual activation unit, an activation layer in the first subnetwork is a leaky rectified linear unit LeakyReLU, and an activation layer in the second subnetwork and an activation layer in the third subnetwork each are a parametric rectified linear unit PReLU.

Optionally, the first decoder network is configured to decode data of UV components, the second subnetwork and the third subnetwork each include the residual activation unit, an activation layer in the second subnetwork is a rectified linear unit ReLU, and an activation layer in the third subnetwork is a leaky rectified linear unit LeakyReLU.

Because flexibility of the PReLU is greater than flexibility of the LeakyReLU, the flexibility of the LeakyReLU is greater than flexibility of the ReLU. Usually, the Y component is related to vision. To be specific, the vision is more sensitive to the Y component. Processing of the data of the Y component is more flexible. Therefore, flexibility of an activation layer of the Y component may be set to be higher. In other words, the PReLU and the LeakyReLU are selected. In this way, decoding performance of the Y component is better. However, the vision is not very sensitive to the UV components. Using a more flexible activation layer may cause data overfitting, which affects decoding performance of the UV components and further affects overall decoding performance. Therefore, flexibility of an activation layer of the UV components is set to be lower. In other words, the LeakyReLU and the ReLU are selected. In this way, a problem of poor decoding performance caused by data overfitting of the UV components can be avoided.

Optionally, if the first decoder network is configured to decode the data of the Y component, the first subnetwork, the second subnetwork, and the third subnetwork each include a residual activation unit; or if the first decoder network is configured to decode the data of the UV components, the second subnetwork and the third subnetwork each include the residual activation unit; and

the residual activation unit includes an activation layer, and an activation layer in the second subnetwork and an activation layer in the third subnetwork are the same, but are different from an activation layer in the first subnetwork.

Optionally, the activation layer in the first subnetwork is a leaky rectified linear unit LeakyReLU, and the activation layer in the second subnetwork and the activation layer in the third subnetwork each are a parametric rectified linear unit PReLU.

For the UV components, if the channel quantity of the input tensor of the fourth subnetwork is larger, the flexibility of the activation layer of the UV components is set to be lower. In other words, the LeakyReLU and the ReLU are selected. In this way, the problem of poor decoding performance caused by data overfitting of the UV components can be avoided. However, if the channel quantity of the input tensor of the fourth subnetwork is smaller, for example, is set to 96, which is the same as that of the Y component, the flexibility of the activation layer of the UV components exerts lower impact on the decoding performance. Therefore, the flexibility of the activation layer of the UV components may be set to be higher. In other words, the PReLU is selected. In this way, the decoding performance is not greatly affected. In addition, because a same activation layer as that of the Y component is used, the parameter configuration process of the first decoder network is simplier.

Optionally, the residual activation unit further includes a group convolution layer, and a group quantity of the group convolution layer varies with a channel quantity of an input tensor of the group convolution layer.

Usually, an amount of data in one group that can be processed by hardware used to implement the group convolution layer is fixed. Therefore, in this embodiment of this application, the group quantity is set to vary with the channel quantity of the input tensor of the group convolution layer, so that the group quantity of the group convolution layer becomes different when the channel quantity of the input tensor becomes different. In this way, it can be ensured as much as possible that an amount of data in one group is maintained consistent with the amount of data in one group that can be processed by the hardware, and is well compatible with the hardware, a data processing delay is reduced, and a problem of a high data processing delay generated by incompatibility, with the hardware, caused when an amount of data in one group obtained by grouping data of the input tensor and the amount of data in one group that can be processed by the hardware are inconsistent in a case of a fixed group quantity is avoided.

Optionally, the group quantity is obtained by dividing the channel quantity of the input tensor of the group convolution layer by a target value, and the target value is an integer multiple of 16. For example, the target value is 16 or 32.

The amount of data in one group that can be processed by the hardware used to implement the group convolution layer is usually a multiple of 16, for example, 16 or 32. Therefore, in this embodiment of this application, the group quantity of the group convolution layer is set to be equal to the channel quantity of the input tensor divided by a multiple of 16. In this way, it can be ensured that the amount of data in one group is a multiple of 16, and therefore, is well compatible with the hardware, the data processing delay is reduced, and a problem of a high data processing delay generated by incompatibility, with the hardware, caused when an amount of data in one group obtained by grouping data of the input tensor is not a multiple of 16 in a case of a fixed group quantity is avoided.

The first decoder network may be a standard decoder network, namely, a decoder network constructed based on a parameter released by an image encoding and decoding standard. In some embodiments, the decoder further includes a second decoder network, and the second decoder network is a user-defined decoder network, namely, a decoder network constructed based on a user-defined decoding rule. The second decoder network is configured to decode a feature map to obtain a reconstructed image, and the feature map is obtained by decoding a bitstream based on the hyper-decoder network and/or the context network included in the decoder.

According to a second aspect, an encoder is provided. The encoder includes a first encoder network, a second encoder network, a first hyper-encoder network, a hyper-decoder network, and a context network, the first encoder network is configured to determine a feature map of a to-be-encoded image, the first hyper-encoder network is configured to determine a hyper-prior feature based on the feature map, and the hyper-decoder network and the context network are configured to encode the hyper-prior feature and the feature map into a bitstream; and

the bitstream is used to be decoded by a decoder, the decoder includes the hyper-decoder network, the context network, and a first decoder network, and the first decoder network is the first decoder network included in the decoder according to the first aspect.

Optionally, the second encoder network is a pre-trained encoder network.

Optionally, the encoder further includes a second hyper-encoder network, and the second hyper-encoder network is a pre-trained hyper-encoder network.

According to a third aspect, an image encoding method is provided, applied to an encoder. The encoder includes a first encoder network, a second encoder network, a first hyper-encoder network, a hyper-decoder network, and a context network, and the method includes:

inputting a to-be-encoded image into the first encoder network, to obtain a feature map;
inputting the feature map into the first hyper-encoder network, to obtain a hyper-prior feature; and
encoding the hyper-prior feature and the feature map into a bitstream through the hyper-decoder network and the context network.

The bitstream is used to be decoded by a decoder, the decoder includes the hyper-decoder network, the context network, and a first decoder network, and the first decoder network is the first decoder network included in the decoder according to the first aspect.

Optionally, the second encoder network is a pre-trained encoder network.

Optionally, the encoder further includes a second hyper-encoder network, and the second hyper-encoder network is a pre-trained hyper-encoder network.

Because the first encoder network is a customized encoder network, the first decoder network is a standard decoder network, the decoder further includes a second decoder network, and the second decoder network is a customized decoder network. After image encoding is performed through the first encoder network, the bitstream may be decoded by the first decoder network, or may be decoded by the second decoder network. When the bitstream is decoded by the first decoder network, the standard decoder network can successfully decode a bitstream obtained through encoding by the customized encoder network. This ensures compatibility of an image encoding and decoding standard. When the bitstream is decoded by the second decoder network, the customized decoder network can successfully decode a bitstream obtained through encoding by the customized encoder network. This achieves optimal encoding and decoding performance.

According to a fourth aspect, an image decoding method is provided, applied to the decoder in the first aspect.

The decoder includes a first decoder network, a second decoder network, a hyper-decoder network, and a context network, and the method includes:

> obtaining a hyper-prior feature by decoding a bitstream;
> obtaining a feature map by decoding the bitstream through the hyper-decoder network and the context network based on the hyper-prior feature; and
> decoding the feature map through the second decoder network, to obtain a reconstructed image.

Optionally, the first decoder network is a pre-trained decoder network.

Because the second decoder network is a customized decoder network, the bitstream may be a bitstream obtained through encoding by a customized encoder network, or may be a bitstream obtained through encoding by a standard encoder network. If the bitstream is a bitstream obtained through encoding by the standard encoder network, after the second decoder network performs decoding, a customized decoder network can successfully decode the bitstream obtained by the standard encoder network. This ensures compatibility of an image encoding and decoding standard. If the bitstream is a bitstream obtained through encoding by the customized encoder network, after the second decoder network performs decoding, the customized decoder network can successfully decode the bitstream obtained through encoding by the customized encoder network. This achieves optimal encoding and decoding performance.

According to a fifth aspect, an image encoding apparatus is provided. The image encoding apparatus has a function of implementing a behavior of the image encoding method according to the third aspect. The image encoding apparatus includes at least one module. The at least one module is configured to implement the image encoding method provided in the third aspect.

According to a sixth aspect, an image decoding apparatus is provided. The image decoding apparatus has a function of implementing a behavior of the image decoding method according to the fourth aspect. The image decoding apparatus includes at least one module. The at least one module is configured to implement the image decoding method provided in the fourth aspect.

According to a seventh aspect, an encoder side device is provided. The encoder side device includes a processor and a memory, and the memory is configured to store a computer program for performing the image encoding method provided in the third aspect. The processor is configured to execute the computer program stored in the memory, to implement the image encoding method according to the third aspect.

Optionally, the encoder side device may further include a communication bus. The communication bus is configured to establish a connection between the processor and the memory.

According to an eighth aspect, a decoder side device is provided. The decoder side device includes a processor and a memory, and the memory is configured to store a computer program for performing the image decoding method provided in the fourth aspect. The processor is configured to execute the computer program stored in the memory, to implement the image decoding method according to the fourth aspect.

Optionally, the decoder side device may further include a communication bus. The communication bus is configured to establish a connection between the processor and the memory.

According to a ninth aspect, a computer-readable storage medium is provided. The storage medium stores instructions. When the instructions run on a computer, the computer is enabled to perform the steps of the image encoding method according to the third aspect or the steps of the image decoding method according to the fourth aspect. Alternatively, the computer-readable storage medium stores a bitstream obtained by one or more processors by performing the method according to the third aspect.

According to a tenth aspect, a computer program product including instructions is provided. When the instructions run on a computer, the computer is enabled to perform the steps of the image encoding method according to the third aspect or the steps of the image decoding method according to the fourth aspect. In other words, a computer program is provided. When the computer program runs on a computer, the computer is enabled to perform the steps of the image encoding method according to the third aspect or the steps of the image decoding method according to the fourth aspect.

According to an eleventh aspect, an encoding and decoding system is provided. The encoding and decoding system includes the decoder according to the first aspect and/or the encoder according to the second aspect.

According to a twelfth aspect, a bitstream storage device is provided, including at least one storage medium and a communication interface.

The communication interface is configured to receive or send a bitstream;

> the at least one storage medium is configured to store the bitstream; and
> the bitstream is obtained by an encoder through encoding in the method according to the third aspect.

According to a thirteenth aspect, a bitstream storage method is provided, including:

receiving a bitstream through a communication interface; and

storing the bitstream in one or more storage media, where the bitstream is obtained by an encoder through encoding in the method according to the third aspect.

According to a fourteenth aspect, a bitstream distribution system is provided, including at least one storage medium and a video stream device.

The at least one storage medium is configured to store the bitstream. The bitstream is obtained by an encoder through encoding in the method according to the third aspect.

The video stream device is configured to respond to a request of a decoder, so that a bitstream in the at least one storage medium is sent to the decoder.

According to a fifteenth aspect, a bitstream distribution method is provided, including:

receiving a first request;

selecting a bitstream from at least one storage medium in response to the first request; and

sending the bitstream to a destination device.

The at least one storage medium is configured to store the bitstream. The bitstream is obtained by an encoder through encoding in the method according to the third aspect.

According to a sixteenth aspect, a bitstream processing system is provided, including an image source device, an encoder, one or more storage media, and a destination device.

The image source device is configured to provide image data.

The encoder is configured to: obtain the image data of the image source device through an interface, and encode the image data to obtain one or more bitstreams. The bitstream is obtained by the encoder through encoding in the method according to the third aspect.

The encoder is configured to store the one or more bitstreams in the one or more storage media; or

the encoder is configured to encapsulate the one or more bitstreams, to obtain a transmission bitstream;

the encoder is configured to transmit the transmission bitstream to the destination device through a communication link or a communication network;

the destination device is configured to decapsulate the transmission bitstream, to obtain the one or more bitstreams; and

the destination device is configured to decode the one or more bitstreams, to obtain decoded data.

Technical effect obtained in the second aspect to the sixteenth aspect is similar to technical effect obtained through a corresponding technical means in the first aspect. Details are not described herein again.

## BRIEF DESCRIPTION OF DRAWINGS

FIG. 1 is a diagram of an implementation environment according to an embodiment of this application;

FIG. 2 is a diagram of an AI encoder model;

FIG. 3 is a diagram of an AI decoder model;

FIG. 4 is a diagram of a JPEG AI encoder model;

FIG. 5 is a diagram of a JPEG AI decoder model;

FIG. 6 is a diagram of a structure of a first decoder network according to an embodiment of this application;

FIG. 7 is a diagram of a structure of a residual activation unit;

FIG. 8 is a diagram of a multi-branch encoder and decoder network structure according to an embodiment of this application;

FIG. 9 is a flowchart of an image encoding method according to an embodiment of this application; and

FIG. 10 is a flowchart of an image decoding method according to an embodiment of this application.

## DESCRIPTION OF EMBODIMENTS

To make objectives, technical solutions, and advantages of embodiments of this application clearer, the following further describes implementations of this application in detail with reference to the accompanying drawings.

For ease of understanding, before a decoder, an encoder, an image encoding method, and an image encoding method provided in embodiments of this application are described in detail, nouns, an implementation environment, and an application scenario in embodiments of this application are first described.

First, nouns in embodiments of this application are explained.

**Artificial intelligence (artificial intelligence, AI)** is technical science that studies and develops a theory, a method, a technology, and an application system for simulating, extending, and expanding human intelligence.

An **AI compression algorithm (AI Codec)** is a data compression method based on a deep learning technology.

**JPEG AI** is an image encoding standard based on an AI compression algorithm, aims to create a deep learning-based image encoding standard, and provides a single-stream compact compressed domain representation. For human visualization, image compression efficiency and performance of image processing and computer vision tasks are clearly improved for an image encoding standard that is commonly used in a case of same subjective quality.

A **tensor** is a high-dimensional matrix. A three-dimensional tensor is a three-dimensional matrix. Three dimensions are a width (width), a height (height), and a channel (channel). The tensor usually includes an input tensor and an output tensor. The input tensor is data input by a network layer based on deep learning, and the output tensor is data output by the network layer based on deep learning.

Usually, the tensor output by an encoder network is also referred to as a latent variable. The latent variable may be restored to original data or data similar to the original data through a decoder network. A tensor output by a hyper-encoder network is also referred to as a hyper-latent variable. The hyper-latent variable is obtained by further encoding the latent variable. The hyper-latent variable may be restored to a latent variable or data similar to the latent variable through the hyper-decoder network.

A **rectified linear unit (rectified linear unit, ReLU)** is a common activation function in deep learning, and is usually a nonlinear function represented by a ramp function and a variant thereof. Common activation functions include a leaky rectified linear unit (leaky ReLU), a parametric rectified linear unit (parametric ReLU, PReLU), and the like.

The ReLU sets all negative values to zero. On the contrary, the LeakyReLU assigns a non-zero slope to all negative values. The PReLU is a variant of the LeakyReLU. In the PReLU, a slope of a negative part is determined based on data rather than predefined. Usually, performance of the LeakyReLU and performance of the PReLU are better than performance of the ReLU. In addition, flexibility of the PReLU is greater than flexibility of the LeakyReLU, and the flexibility of the LeakyReLU is greater than flexibility of the ReLU.

**BD-Rate** is short for Bjøntegaard-delta-rate, and is used to evaluate rate-distortion (RD, rate-rate, distortion-distortion) performance of different video encoders. In performance measurement between compression methods, BD-Rate of a method A relative to a method B represents a bitrate difference of the method A relative to the method B in a case of a same objective indicator. BD-Rate is usually expressed in percentage. In a case of -x%, it indicates that method A can save x% space relative to the method B; and in a case of x%, it indicates that x% space is increased.

A **peak signal to noise ratio (peak signal to noise ratio, PSNR)** is an objective standard for evaluating image quality. A value range of the PSNR is greater than 0. A larger value of the PSNR indicates better image quality and a greater similarity between a reconstructed image and an original image.

A **multi-scale structural similarity (multi-scale structural similarity, MS-SSIM)** is a structural similarity (structural similarity, SSIM) index based on a plurality of scales (that is, an image is scaled in descending order based on a specific rule). A value range of the MS-SSIM is from 0 to 1. A larger value of the MS-SSIM indicates better image quality and a greater similarity between a reconstructed image and an original image.

In some embodiments, the PSNR and the MS-SSIM are two indicators used to measure image reconstruction quality.

**Conditional color separation (conditional color separation, CCS)** is an encoding manner in which a Y component and UV components are separated for encoding. When different components are encoded/decoded, other components can be used as conditions.

Then, an implementation environment in embodiments of this application is described.

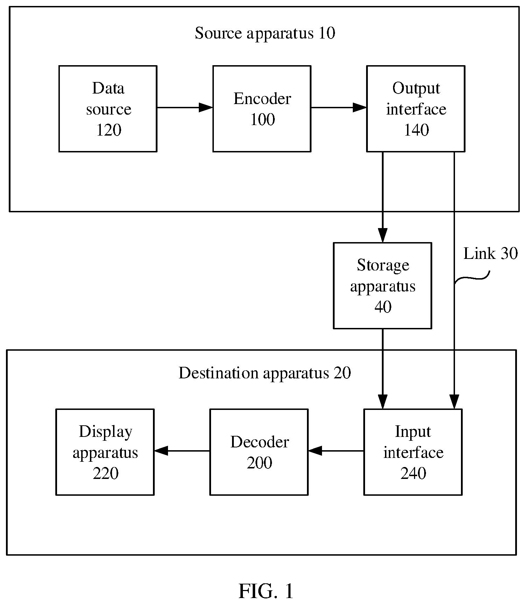

FIG. 1 is a diagram of an implementation environment according to an embodiment of this application. The implementation environment includes a source apparatus 10, a destination apparatus 20, a link 30, and a storage apparatus 40. The source apparatus 10 may generate an encoded image. Therefore, the source apparatus 10 may also be referred to as an image encoding apparatus or an encoder side. The destination apparatus 20 may decode the encoded image generated by the source apparatus 10. Therefore, the destination apparatus 20 may also be referred to as an image decoding apparatus or a decoder side. The link 30 may receive the encoded image generated by the source apparatus 10, and may transmit the encoded image to the destination apparatus 20. The storage apparatus 40 may receive the encoded image generated by the source apparatus 10, and may store the encoded image. In this case, the destination apparatus 20 may directly obtain the encoded image from the storage apparatus 40. Alternatively, the storage apparatus 40 may correspond to a file server or another intermediate storage apparatus that can store the encoded image generated by the source apparatus 10. In this case, the destination apparatus 20 may transmit, in a streaming manner, or download the encoded image stored on the storage apparatus 40.

The source apparatus 10 and the destination apparatus 20 each may include one or more processors and a memory coupled to the one or more processors. The memory may include a random access memory (random access memory, RAM), a read-only memory (read-only memory, ROM), an electrically erasable programmable read-only memory (electrically erasable programmable read-only memory, EEPROM), a flash memory, any other medium that can be configured to store required program code in a form of instructions or data structures accessible to a computer, or the like. For example, the source apparatus 10 and the destination apparatus 20 each may include a mobile phone, a smartphone, a personal digital assistant (personal digital assistant, PDA), a wearable device, a palmtop computer PPC (pocket PC), a tablet computer, a smart in-vehicle infotainment system, a smart television, a smart sound box, a desktop computer, a mobile computing apparatus, a notebook (for example, a laptop) computer, a tablet computer, a set-top box, a telephone handheld such as a so-called "smart" phone, a television, a camera, a display apparatus, a digital media player, a video game console, a vehicle-mounted computer, or the like.

The link 30 may include one or more media or apparatuses that can transmit the encoded image from the source apparatus 10 to the destination apparatus 20. In a possible implementation, the link 30 may include one or more communication media that can enable the source apparatus 10 to directly send the encoded image to the destination apparatus 20 in real time. In this embodiment of this application, the source apparatus 10 may modulate the encoded image based on a communication standard. The communication standard may be a wireless communication protocol, or the like; and may send a modulated image to the destination apparatus 20. The one or more communication media may include a wireless communication medium and/or a wired communication medium. For example, the one or more communication media may include a radio frequency (radio frequency, RF) spectrum or one or more physical transmission lines. The one or more communication media may be a part of a packet-based network. The packet-based network may be a local area network, a wide area network, a global network (for example, the Internet), or the like. The one or more communication media may include a router, a switch, a base station, another device that facilitates communication from the source apparatus 10 to the destination apparatus 20, or the like. This is not specifically limited in this embodiment of this application.

In a possible implementation, the storage apparatus 40 may store the received encoded image sent by the source apparatus 10, and the destination apparatus 20 may directly obtain the encoded image from the storage apparatus 40. In this case, the storage apparatus 40 may include any one of a plurality of types of distributed or locally accessed data storage media. For example, the any one of the plurality of types of distributed or locally accessed data storage media may be a hard disk drive, a Blu-ray disc, a digital versatile disc (digital versatile disc, DVD), a compact disc read-only memory (compact disc read-only memory, CD-ROM), a flash memory, a volatile or non-volatile memory, or any other appropriate digital storage medium for storing the encoded image.

In a possible implementation, the storage apparatus 40 may correspond to the file server or the another intermediate storage apparatus that can store the encoded image generated by the source apparatus 10, and the destination apparatus 20 may transmit, in the streaming manner, or download the image stored on the storage apparatus 40. The file server may be any type of server that can store the encoded image and send the encoded image to the destination apparatus 20. In a possible implementation, the file server may include a network server, a file transfer protocol (file transfer protocol, FTP) server, a network attached storage (network attached storage, NAS) apparatus, a local disk drive, or the like. The destination apparatus 20 may obtain the encoded image through any standard data connection (including an Internet connection). The any standard data connection may include a wireless channel (for example, a Wi-Fi connection), a wired connection (for example, a digital subscriber line (digital subscriber line, DSL) or a cable modem), or a combination of a wireless channel and a wired connection suitable for obtaining the encoded image stored on the file server. Transmission of the encoded image from the storage apparatus 40 may be streaming transmission, download transmission, or a combination thereof.

The implementation environment shown in FIG. 1 is merely a possible implementation. In addition, technologies in embodiments of this application are not only applicable to the source apparatus 10 that can encode an image and the destination apparatus 20 that can decode the encoded image that are shown in FIG. 1, but also applicable to another apparatus that can encode an image and another apparatus that can decode the encoded image. This is not specifically limited in embodiments of this application.

In the implementation environment shown in FIG. 1, the source apparatus 10 includes a data source 120, an encoder 100, and an output interface 140. In some embodiments, the output interface 140 may include a modulator/demodulator (modem) and/or a transmitter. The transmitter may also be referred to as an emitter. The data source 120 may include an image capture apparatus (for example, a camera), an archive including a previously captured image, a feed-in interface for receiving an image from an image content provider, and/or a computer graphics system for generating an image, or a combination of these sources of images.

The data source 120 may send the image to the encoder 100, and the encoder 100 may encode the received image sent by the data source 120 to obtain the encoded image. The encoder may send the encoded image to the output interface. In some embodiments, the source apparatus 10 directly sends the encoded image to the destination apparatus 20 through the output interface 140. In another embodiment, the encoded image may alternatively be stored in the storage apparatus 40, so that the destination apparatus 20 subsequently obtains the encoded image for decoding and/or display.

In the implementation environment shown in FIG. 1, the destination apparatus 20 includes an input interface 240, a decoder 200, and a display apparatus 220. In some embodiments, the input interface 240 includes a receiver and/or a modem. The input interface 240 may receive the encoded image through the link 30 and/or from the storage apparatus 40, and then send the encoded image to the decoder 200. The decoder 200 may decode the received encoded image to obtain a decoded image. The decoder may send the decoded image to the display apparatus 220. The display apparatus 220 may be integrated with the destination apparatus 20 or disposed outside the destination apparatus 20. Usually, the display apparatus 220 displays the decoded image. The display apparatus 220 may be a display apparatus of any one of a plurality of types. For example, the display apparatus 220 may be a liquid crystal display (liquid crystal display, LCD), a plasma display, an organic light-emitting diode (organic light-emitting diode, OLED) display, or another type of display apparatus.

Although not shown in FIG. 1, in some aspects, the encoder 100 and the decoder 200 may be respectively integrated with an encoder and a decoder, and may include an appropriate multiplexer-demultiplexer (multiplexer-demultiplexer, MUX-DEMUX) unit or other hardware and software for encoding both audio and a video in a shared data stream or a separate data stream. In some embodiments, if applicable, the MUX-DEMUX unit may comply with the ITU H.223 multiplexer protocol or another protocol like the user datagram protocol (user datagram protocol, UDP).

The encoder 100 and the decoder 200 each may be any one of the following circuits: one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, or any combination thereof. If technologies in embodiments of this application are partially implemented in software, an apparatus may store instructions for the software in an appropriate non-volatile computer-readable storage medium, and may execute the instructions in hardware through one or more processors, to implement technologies in embodiments of this application. Any one of the foregoing content (including hardware, software, a combination of hardware and software, and the like) may be considered as one or more processors. The encoder 100 and the decoder 200 each may be included in one or more encoders or decoders. Either the encoder or the decoder may be integrated as a part of a combined encoder/decoder (codec) in a corresponding apparatus.

In this embodiment of this application, the encoder 100 may be generally referred to as "signaling" or "sending" some information to another apparatus, for example, the decoder 200. The term "signaling" or "sending" may generally be transmission of syntax elements and/or other data used to decode a compressed image. Such transmission may occur in real time or almost in real time. Alternatively, such communication may occur after a period of time, for example, may occur when a syntax element in an encoded bitstream is stored in a computer-readable storage medium during encoding. The decoding apparatus may then retrieve the syntax element at any time after the syntax element is stored in the medium.

It should be noted that the application scenario and the implementation environment described in embodiments of this application are intended to describe the technical solutions in embodiments of this application more clearly, but constitute no limitation on the technical solutions provided in embodiments of this application. A person of ordinary skill in the art may learn that, with evolution of the application scenario and the implementation environment, the technical solutions provided in embodiments of this application are also applicable to a similar technical problem.

Finally, an application scenario in embodiments of this application is described.

An encoding and decoding technology is a technology in which original signal data is represented in a lossy or lossless manner by using a small quantity of bits based on data features such as spatial redundancy, visual redundancy, and statistical redundancy, and can implement effective transmission and storage of information such as images/videos/audio. This technology plays an important role in a media era in which types and a data amount of currently transmitted or stored information are increasing.

Image compression is used as an example. The image compression includes lossy compression and lossless compression. The lossy compression achieves a large compression ratio at a cost of reducing image quality to some extent, and the lossless compression does not cause a loss of image details. A conventional image/video compression algorithm has been developed for decades, and mature compression standards such as high efficiency video coding (high efficiency video coding, HEVC) and versatile video coding (Versatile Video Coding, VVC) are formed. The conventional image/video compression algorithm has advantages such as comprehensive supported functions, good universality, and good hardware support, and are widely used. However, there is a bottleneck in improving encoding efficiency.

As deep learning outperforms a conventional algorithm in many computer vision tasks such as image recognition and target detection, more researchers start to explore deep learning-based image/video compression methods. Unlike a conventional image algorithm in which image encoding, quantization, and entropy encoding, and the like are separately optimized through a manual design, all modules (an encoder network, an entropy estimation network, a decoder network, and the like) in an AI image compression algorithm are optimized as a whole. Therefore, an AI image compression solution has better compression effect. However, deep learning is a resource-intensive algorithm, and not only requires high computing costs, but also consumes a large amount of memory. Although computing resources are increasing, it is still very important to optimize training and inference of a deep learning network for a model implementation. In particular, more models are migrated from a server side to a device with limited resources such as an edge side, for example, a smartphone and an embedded device. How to deploy a complex model on the device with limited resources is a problem that needs to be resolved based on a current deep learning technology.

A deep learning-based image compression method usually relates to an AI compression model and a JPEG AI compression model. For ease of understanding, encoding and decoding processes of the two compression models are briefly described herein.

(1) AI compression model

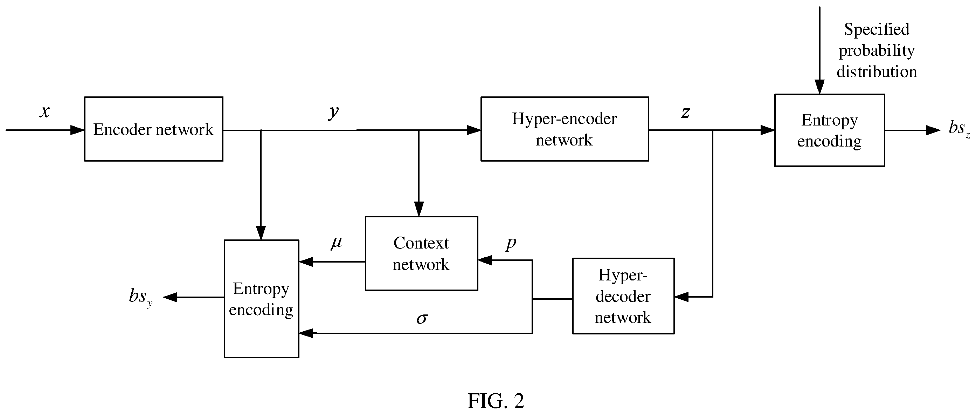

FIG. 2 is a diagram of an AI encoder model. The AI encoder model is also referred to as an encoder, and is used on an encoder side. During encoding, a to-be-encoded image x is input into an encoder network to obtain a feature map y, the feature map y is input into a hyper-encoder network to obtain a hyper-prior feature z, and entropy encoding is performed on the hyper-prior feature z based on a specified probability distribution to encode the hyper-prior feature z into a bitstream. In addition, the hyper-prior feature z is input into a hyper-decoder network to obtain a prior feature p and a variance $\sigma$. An average value $\mu$ is obtained based on the prior feature p and the feature map y through a context network, and then entropy encoding is performed on the feature map y based on the probability distribution $N(\mu, \sigma)$ to encode the feature map y into a bitstream.

A bit sequence obtained by performing entropy encoding on the hyper-prior feature z is a partial bit sequence included in the bitstream. The partial bit sequence may be referred to as a hyper-prior bitstream, and is denoted as $bs_z$. A bit sequence obtained by performing entropy encoding on the feature map y is a partial bit sequence included in the bitstream. The partial bit sequence may be referred to as an image bitstream, and is denoted as $bs_y$.

In some embodiments, the context network includes a context model and a probability distribution estimation model. In this case, the feature map y may be input into the context model, to obtain a context feature $\varphi$. The average value $\mu$ is estimated with reference to the prior feature p and the context feature $\varphi$ by using the probability distribution estimation model. Certainly, this is merely an example. In an actual application, an implementation may alternatively be performed in another manner. This is not limited in this embodiment of this application. In addition, the foregoing provides descriptions by using entropy encoding as an example. In an actual application, encoding may alternatively be performed in another encoding manner. This is not limited in this embodiment of this application either.

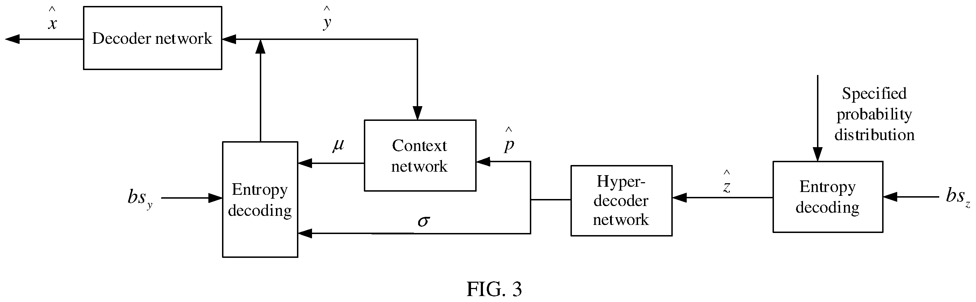

FIG. 3 is a diagram of an AI decoder model. The AI decoder model is also referred to as a decoder, and is used on a decoder side. During decoding, entropy decoding is performed, based on a specified probability distribution, on a hyper-prior bitstream $bs_z$ included in a bitstream to obtain a hyper-prior feature $\hat{z}$, and the hyper-prior feature $\hat{z}$ is input into a hyper-decoder network to obtain a prior feature $\hat{p}$ and a variance $\sigma$. Side information is determined from a part of decoded image features, an average value $\mu$ is obtained through a context network with reference to the prior feature $\hat{p}$ and the side information, and a feature map $\hat{y}$ is obtained, based on a probability distribution $N(\mu, \sigma)$, through entropy decoding from an image bitstream $bs_y$ included in a bitstream. The feature map $\hat{y}$ is input into a decoder network to obtain a reconstructed image $\hat{x}$.

In some embodiments, the context network includes a context model and a probability distribution estimation model. In this case, the average value $\mu$ corresponding to the part of image features can be estimated based on the prior feature $\hat{p}$ by using the probability distribution estimation model, and the part of image features is obtained, based on the probability distribution $N(\mu, \sigma)$ of the part of image features, through entropy decoding from the image bitstream $bs_y$ included in the bitstream. For another image feature, side information is determined from a decoded image feature, the side information is input into the context model to obtain a context feature $\hat{\phi}$, and an average value $\mu$ corresponding to the another image feature is estimated with reference to the prior feature $\hat{p}$ and the context feature $\hat{\phi}$ by using the probability distribution estimation model. Certainly, this is merely an example. In an actual application, an implementation may alternatively be performed in another manner. This is not limited in this embodiment of this application. In addition, the foregoing provides descriptions by using entropy decoding as an example. In an actual application, decoding may be performed in another decoding manner corresponding to an encoding manner. This is not limited in this embodiment of this application either.

It should be noted that, if a probability distribution estimation network is modeled by using a Gaussian model (for example, a single Gaussian model or a hybrid Gaussian model), an estimated probability distribution includes an average value and a variance. If a probability distribution estimation network is modeled by using a Laplacian distribution model, an estimated probability distribution includes a position parameter and a scale parameter. If a probability distribution estimation network is modeled by using a logistic distribution model, an estimated probability distribution includes an average value and a scale parameter. The foregoing provides descriptions by using the Gaussian model as an example.

In addition, the hyper-decoder network includes a hyper-decoder prediction network and a hyper-scale decoder network. The hyper-decoder prediction network is configured to determine a prior feature, and the hyper-scale decoder network is configured to determine a variance. To be specific, a hyper-prior feature is input into the hyper-decoder prediction network to obtain the prior feature, and a hyper-prior feature is input into the hyper-scale decoder network to obtain the variance.

(2) JPEG AI compression model

The JPEG AI compression model implements image encoding and decoding by encoding and decoding each separated component of a to-be-encoded image based on an auto-encoder structure in which color components are separated. In addition, a basic structure of the JPEG AI compression model is the same as a structure of the foregoing AI compression model. However, an image input component of the JPEG AI compression model is YUV components, and encoding and decoding operations are separately performed on a Y component and UV components. During encoding, the Y component is separately encoded by using an architecture shown in FIG. 2, and the UV components are encoded with reference to data of the Y component. During decoding, the Y component is separately decoded by using an architecture shown in FIG. 3, and the UV components are decoded with reference to the data of the Y component.

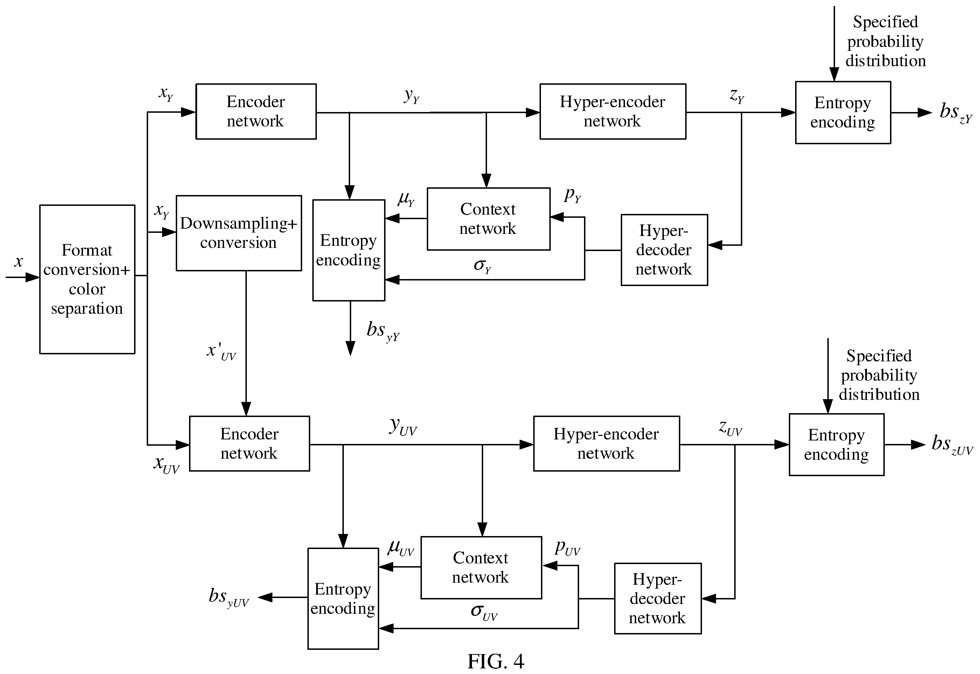

FIG. 4 is a diagram of a JPEG AI encoder model. The JPEG AI encoder model is also referred to as an encoder, and is used on an encoder side. During encoding, a to-be-encoded image x in an RGB (a color mode, where R represents red, G represents green, and B represents blue) format is converted into an image in a YUV (a color encoding method, where Y represents luminance, namely, a grayscale value, and U and V represent chroma) format by using color space; color component separation is performed on the image in the YUV format to obtain an image $x_Y$ of a Y component and an image $x_{UV}$ of UV components; the image $x_Y$ of the Y component is input into an encoder network to obtain a feature map $y_Y$ of the Y component; the feature map $y_Y$ of the Y component is input into a hyper-encoder network to obtain a hyper-prior feature $z_Y$ of the Y component; and entropy encoding is performed on the hyper-prior feature $z_Y$ of the Y component based on a specified probability distribution, to encode the hyper-prior feature $z_Y$ of the Y component into a bitstream. The hyper-prior feature $z_Y$ of the Y component is input into a hyper-decoder network to obtain a prior feature $p_Y$ and a variance $\sigma_Y$ of the Y component; an average value $\mu_Y$ is obtained through a context network based on the prior feature $p_Y$ and the variance $\sigma_Y$; and entropy encoding is performed on the feature map $y_Y$ of the Y component based on a probability distribution $N(\mu_Y, \sigma_Y)$ of the Y component to encode the feature map $y_Y$ of the Y component into a bitstream.

In addition, the image $x_Y$ of the Y component is downsampled and then converted into an auxiliary image $x'_{UV}$ of the UV components, the image $x_{UV}$ of the UV components and the auxiliary image $x'_{UV}$ of the UV components are input into the encoder network to obtain a feature map $y_{UV}$ of the UV components, the feature map $y_{UV}$ of the UV components is input into the hyper-encoder network to obtain a hyper-prior feature $z_{UV}$ of the UV components, and entropy encoding is performed on the hyper-prior feature $z_{UV}$ of the UV components based on a specified probability distribution to encode the hyper-prior feature $z_{UV}$ of the UV components into a bitstream. The hyper-prior feature $z_{UV}$ of the UV components is input into the hyper-decoder network to obtain a prior feature $p_{UV}$ and a variance $\sigma_{UV}$ of the UV components, an average value $\mu_{UV}$ of the UV components is obtained through the context network based on the prior feature $p_{UV}$ of the UV components and the feature map $y_{UV}$, and entropy encoding is performed on the feature map $y_{UV}$ of the UV components based on a probability distribution $N(\mu_{UV}, \sigma_{UV})$ of the UV components to encode the feature map $y_{UV}$ of the UV components into a bitstream.

A bit sequence obtained by performing entropy encoding on the hyper-prior feature $z_Y$ of the Y component is a partial bit sequence included in the bitstream. The partial bit sequence may be referred to as a hyper-prior bitstream $bs_{zY}$ of the Y component. A bit sequence obtained by performing entropy encoding on the feature map $y_Y$ of the Y component is a partial bit sequence included in the bitstream. The partial bit sequence may be referred to as an image bitstream $bs_{yY}$ of the Y component. A bit sequence obtained by performing entropy encoding on the hyper-prior feature $z_{UV}$ of the UV components is a partial bit sequence included in the bitstream. The partial bit sequence may be referred to as a hyper-prior bitstream $bs_{zUV}$ of the UV components. A bit sequence obtained by performing entropy encoding on the feature map $y_{UV}$ of the UV components is a partial bit sequence included in the bitstream. The partial bit sequence may be referred to as an image bitstream $bs_{yUV}$ of the UV components.

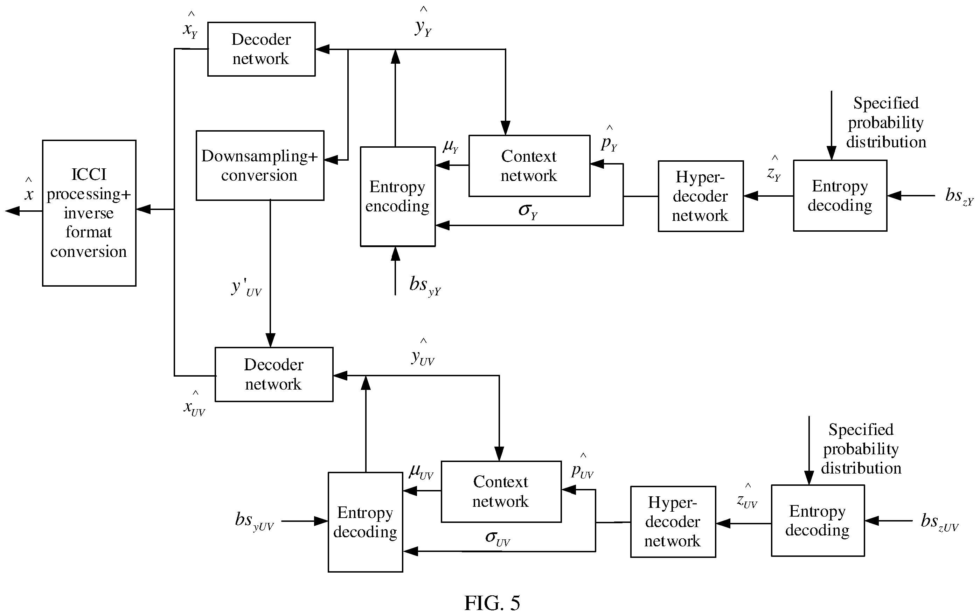

FIG. 5 is a diagram of a JPEG AI decoder model. The JPEG AI decoder model is also referred to as a decoder, and is used on a decoder side. During decoding, entropy decoding is performed, based on a specified probability distribution, on a hyper-prior bitstream $bs_{zY}$ of a Y component included in a bitstream to obtain a hyper-prior feature $\hat{z}_Y$ of the Y component, and the hyper-prior feature $\hat{z}_Y$ of the Y component is input into a hyper-decoder network to obtain a prior feature $\hat{p}_Y$ and a variance $\sigma_Y$ of the Y component. Side information is determined from a part of decoded image features, an average value $\mu_Y$ of the Y component is obtained through a context network with reference to the prior feature $\hat{p}_Y$ of the Y component and the side information, and a feature map $\hat{y}_Y$ of the Y component is obtained, based on a probability distribution $N(\mu_Y, \sigma_Y)$ of the Y component, through entropy decoding from an image bitstream of the Y component included in a bitstream. The feature map $\hat{y}_Y$ of the Y component is input into a decoder network to obtain a reconstructed image $\hat{x}_Y$

of the Y component.

In addition, the feature map $y_Y$ of the Y component is downsampled and then converted into an auxiliary feature $y'_{UV}$ of UV components. Then, entropy decoding is performed, based on a specified probability distribution, on a hyper-prior bitstream $bs_{zUV}$ of the UV components included in a bitstream to obtain a hyper-prior feature $\hat{z}_{UV}$ of the UV components, and the hyper-prior feature $\hat{z}_{UV}$ of the UV components is input into the hyper-decoder network to obtain a prior feature $\hat{p}_{UV}$ and a variance $\sigma_{UV}$ of the UV components. Side information is determined from a part of decoded image features, an average value $\mu_{UV}$ of the UV components is obtained through the context network with reference to the prior feature $\hat{p}_{UV}$ of the UV components and the side information, and a feature map $\hat{y}_{UV}$ of the UV components is obtained, based on a probability distribution $N(\mu_{UV}, \sigma_{UV})$ of the UV components, through entropy decoding from an image bitstream of the UV components included in a bitstream. The feature map $\hat{y}_{UV}$ of the UV components and the auxiliary feature $y'_{UV}$ of the UV components are input into the decoder network to obtain a reconstructed image $\hat{x}_{UV}$ of the UV components.

Then, the reconstructed image $\hat{x}_Y$ of the Y component and the reconstructed image $\hat{x}_{UV}$ of the UV components are processed through an inter channel correction information filtering (Inter Channel Correlation Information, ICCI) network, to obtain a reconstructed image in a YUV format. Finally, the reconstructed image in the YUV format is converted into an RGB format through inverse color space conversion, to obtain a reconstructed image $\hat{x}$.

The foregoing describes a general process of the encoding and decoding processes of the JPEG AI compression model. For partial detailed content, refer to the foregoing related explanations of the AI compression model. Details are not described herein again.

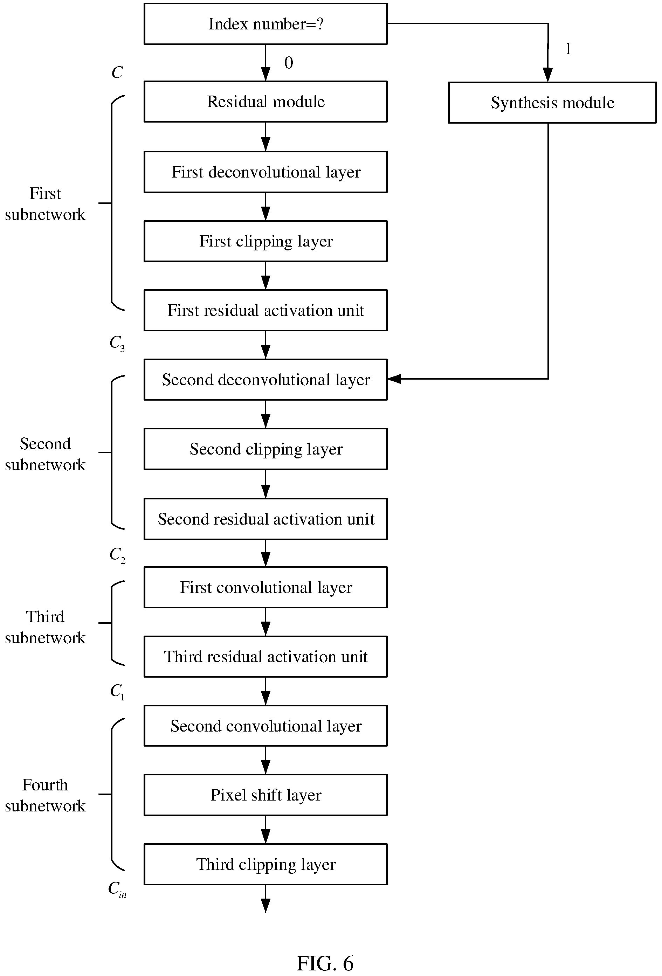

Both the AI compression model and the JPEG AI compression model relate to a decoder network, and computational complexity of the decoder network is high. To reduce computational complexity, an embodiment of this application provides a decoder. The decoder includes a first decoder network, a hyper-decoder network, and a context network. FIG. 6 is a diagram of a structure of a first decoder network according to an embodiment of this application. The first decoder network includes a first subnetwork, a second subnetwork, a third subnetwork, and a fourth subnetwork that are sequentially connected from an input to an output, a channel quantity of an input tensor of the fourth subnetwork is greater than a channel quantity of an input tensor of the third subnetwork, and the channel quantity of the input tensor of the fourth subnetwork is greater than a channel quantity of an input tensor of the second subnetwork.

Because the first decoder network includes the first subnetwork, the second subnetwork, the third subnetwork, and the fourth subnetwork that are sequentially connected from the input to the output, an input tensor of the first subnetwork is an input tensor of the first decoder network, an output tensor of the first subnetwork is the input tensor of the second subnetwork, an output tensor of the second subnetwork is the input tensor of the third subnetwork, and the input tensor of the third subnetwork is an output tensor of the fourth subnetwork, the output tensor of the fourth subnetwork is an output tensor of the first decoder network.

It should be noted that "sequential connection" in this embodiment of this application is a logical connection rather than a physical connection. In other words, "sequential connection" means that an output tensor of a previous network is an input tensor of a current network. A subsequent sequential connection between network layers is the same.

For ease of description, as shown in FIG. 6, a channel quantity of the input tensor of the first decoder network is denoted as C. In other words, a channel quantity of the input tensor of the first subnetwork is C. A channel quantity of the output tensor of the first subnetwork is denoted as $C_3$. In other words, the channel quantity of the input tensor of the second subnetwork is $C_3$. A channel quantity of the output tensor of the second subnetwork is denoted as $C_2$. In other words, the channel quantity of the input tensor of the third subnetwork is $C_2$. A channel quantity of the output tensor of the third subnetwork is denoted as $C_1$. In other words, the channel quantity of the input tensor of the fourth subnetwork is $C_1$. A channel quantity of the output tensor of the fourth subnetwork is denoted as $C_{in}$. In other words, a channel quantity of the output tensor of the first decoder network is $C_{in}$.

The fourth subnetwork is close to the output of the first decoder network, a computation amount of the fourth subnetwork is usually represented by a product of the channel quantity of the input tensor of the fourth subnetwork and the channel quantity of the output tensor of the first decoder network, namely, $C_1*C_{in}$, and the channel quantity of the output tensor of the first decoder network is usually very small. Therefore, the channel quantity of the input tensor of the fourth subnetwork is set to be larger. In this way, an increase in the computation amount is not very large. The first subnetwork is close to the input of the first decoder network, a computation amount of the first subnetwork is usually represented by a product of the channel quantity of the input tensor of the first decoder network and the channel quantity of the output tensor of the first subnetwork, namely, $C*C_3$, and the channel quantity of the input tensor of the first decoder network is usually very large. Therefore, the channel quantity of the output tensor of the first subnetwork is set to be smaller. In this way, the computation amount of the first subnetwork can be reduced. Similarly, a computation amount of the second subnetwork located in the middle is usually represented by a product of the channel quantity of the input tensor of the second subnetwork and the channel quantity of the output tensor of the second subnetwork, namely, $C_3*C_2$. Usually, a computation amount of an intermediate process is large. Therefore, the channel quantity of the output tensor of the second subnetwork is set to be smaller. In other words, the channel quantity of the input tensor of the third subnetwork is set to be smaller. In this way, the computation amount of the intermediate process is reduced.

In other words, with reference to a structure of the first decoder network, the channel quantity of the input tensor of the fourth subnetwork is set to be greater than the channel quantity of the input tensor of the third subnetwork and the channel quantity of the input tensor of the second subnetwork. In other words, a channel quantity of a tensor close to an input side of the first decoder network is set to be smaller, and a channel quantity of a tensor close to an output side of the first decoder network is set to be larger. In this way, computational complexity of the first decoder network can be reduced. Further, it can be ensured that quality of an image reconstructed by the first decoder network is not clearly reduced, and a problem that computational complexity of the first decoder network is high when a channel quantity of a tensor close to an input layer of the first decoder network is large and the channel quantity of the tensor close to the output side of the first decoder network is small is avoided.

Based on the foregoing descriptions, in a JPEG AI compression model, color component separation needs to be performed on an image. To be specific, a to-be-encoded image is separated into an image of a Y component and an image of UV components. In this way, the first decoder network may decode data of the Y component, and may further decode data of the UV components. When the first decoder network is configured to decode the data of the Y component, the channel quantity of the input tensor of the fourth subnetwork is 96, and the channel quantity of the input tensor of the third subnetwork and the channel quantity of the input tensor of the second subnetwork each are 64. When the first decoder network is configured to decode the data of the UV components, the channel quantity of the input tensor of the fourth subnetwork is 128, and the channel quantity of the input tensor of the third subnetwork and the channel quantity of the input tensor of the second subnetwork each are 64.

For example, Table 1 may illustrate the channel quantity of the input tensor of the fourth subnetwork, the channel quantity of the input tensor of the third subnetwork, and the channel quantity of the input tensor of the second subnetwork that are included in the first decoder network.

Table 1

|        | Y component | UV components |
|--------|-------------|---------------|
| C      | 160         | 32            |
| $C_3$  | 64          | 64            |
| $C_2$  | 64          | 64            |
| $C_1$  | 96          | 128           |

It should be noted that, C is the channel quantity of the input tensor of the first decoder network, and the input tensor of the first decoder network is usually an output tensor of another network. Therefore, the channel quantity of the input tensor of the first decoder network is not adjusted in this embodiment of this application.

Each channel quantity shown in Table 1 is merely an example. In some other embodiments, another value may be set, provided that it is ensured that a channel quantity of a tensor close to an input side of the first decoder network is smaller, and a channel quantity of a tensor close to an output side of the first decoder network is larger. For example, when the first decoder network is configured to decode the data of the Y component, the channel quantity of the input tensor of the fourth subnetwork is 96, and the channel quantity of the input tensor of the third subnetwork and the channel quantity of the input tensor of the second subnetwork each are 64. When the first decoder network is configured to decode the data of the UV components, the channel quantity of the input tensor of the fourth subnetwork is 96, and the channel quantity of the input tensor of the third subnetwork and the channel quantity of the input tensor of the second subnetwork each are 64. That is, a same channel quantity as that of the Y component may be used for the UV components, so that a parameter configuration process of the first decoder network is simpler.

In FIG. 6, when an index number (a syntax element is compIdx) is equal to 0, it indicates that the first decoder network is configured to decode the data of the Y component; and when the index number is equal to 1, it indicates that the first decoder network is configured to decode the data of the UV components. When the first decoder network is configured to decode the data of the Y component, the first subnetwork of the first decoder network includes a residual module, a first deconvolutional layer, a first clipping layer, and a first residual activation unit. When the first decoder network is configured to decode the data of the UV components, the first subnetwork of the first decoder network includes a synthesis module.

Regardless of whether the first decoder network is configured to decode the data of the Y component or decode the data of the UV components, the second subnetwork of the first decoder network includes a second deconvolutional layer, a second clipping layer, and a second residual activation unit, the third subnetwork includes a first convolutional layer and a third residual activation unit, and the fourth subnetwork includes a second convolutional layer, a pixel shift layer, and a third clipping layer.

In other words, if the first decoder network is configured to decode the data of the Y component, the first subnetwork, the second subnetwork, and the third subnetwork each include a residual activation unit; or if the first decoder network is configured to decode the data of the UV components, the second subnetwork and the third subnetwork each include the residual activation unit. That is, at least two of the first subnetwork, the second subnetwork, and the third subnetwork include a residual activation unit.

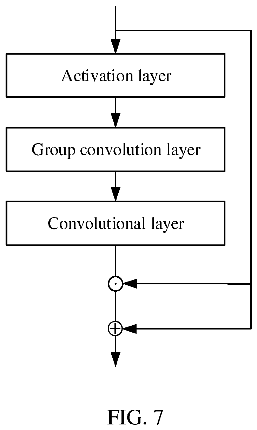

FIG. 7 is a diagram of a structure of a residual activation unit. The residual activation unit includes an activation layer, a group convolution layer, and a convolutional layer. When the at least two of the first subnetwork, the second subnetwork, and the third subnetwork include the residual activation unit, activation layers in the at least two subnetworks are different. In this way, activation layers with different flexibility may be selected according to different requirements, to avoid a problem caused in a case of a same activation layer in a data processing process of the first decoder network.

In some embodiments, when the first decoder network is configured to decode the data of the Y component, the first subnetwork, the second subnetwork, and the third subnetwork each include the residual activation unit, an activation layer in the first subnetwork is a LeakyReLU, and an activation layer in the second subnetwork and an activation layer in the third subnetwork each are a PReLU.

In some other embodiments, the first decoder network is configured to decode the data of the UV components, the second subnetwork and the third subnetwork each include the residual activation unit, an activation layer in the second subnetwork is a ReLU, and an activation layer in the third subnetwork is a LeakyReLU.

Based on the foregoing descriptions, flexibility of the PReLU is greater than flexibility of the LeakyReLU, and the flexibility of the LeakyReLU is greater than flexibility of the ReLU. Usually, the Y component is related to vision. To be specific, the vision is more sensitive to the Y component. Processing of the data of the Y component is more flexible. Therefore, flexibility of an activation layer of the Y component may be set to be higher. In other words, the PReLU and the LeakyReLU are selected. In this way, decoding performance of the Y component is better. However, the vision is not very sensitive to the UV components. Using a more flexible activation layer may cause data overfitting, which affects decoding performance of the UV components and further affects overall decoding performance. Therefore, flexibility of an activation layer of the UV components is set to be lower. In other words, the LeakyReLU and the ReLU are selected. In this way, a problem of poor decoding performance caused by data overfitting of the UV components can be avoided.

For example, Table 2 may illustrate the activation layer in the first subnetwork, the activation layer in the second subnetwork, and the activation layer in the third subnetwork.

Table 2

|  | Y component | UV components |
|---|---|---|
| First subnetwork | LeakyReLU | - |
| Second subnetwork | PReLU | ReLU |
| Third subnetwork | PReLU | LeakyReLU |

It should be noted that, when the first decoder network is configured to decode the data of the UV components, a first network does not include the residual activation unit. Therefore, Table 2 does not illustrate an activation layer that is in the first network and that corresponds to the UV components.

A type of an activation layer included in each subnetwork shown in Table 2 is merely an example. In some other embodiments, another type of activation layer may be further set, provided that the activation layers of the Y component are different and have higher flexibility, and activation layers of the UV components are different and have lower flexibility.

In some other embodiments, an activation layer in the second subnetwork and an activation layer in the third subnetwork are the same, but are different from an activation layer in the first subnetwork. For example, the activation layer in the first subnetwork is a LeakyReLU, and the activation layer in the second subnetwork and the activation layer in the third subnetwork each are a PReLU. In other words, when the first decoder network is configured to decode the data of the Y component, the first subnetwork, the second subnetwork, and the third subnetwork each include the residual activation unit, the activation layer in the first subnetwork is a LeakyReLU, and the activation layer in the second subnetwork and the activation layer in the third subnetwork each are a PReLU. When the first decoder network is configured to decode the data of the UV components, the second subnetwork and the third subnetwork each include the residual activation unit, and the activation layer in the second subnetwork and the activation layer in the third subnetwork each are a PReLU.

For the UV components, if the channel quantity of the input tensor of the fourth subnetwork is larger, the flexibility of the activation layer of the UV components is set to be lower. In other words, the LeakyReLU and the ReLU are selected. In this way, the problem of poor decoding performance caused by data overfitting of the UV components can be avoided. However, if the channel quantity of the input tensor of the fourth subnetwork is smaller, for example, is set to 96, which is the same as that of the Y component, the flexibility of the activation layer of the UV components exerts lower impact on the decoding performance. Therefore, the flexibility of the activation layer of the UV components may be set to be higher. In other words, the PReLU is selected. In this way, the decoding performance is not greatly affected. In addition, because a same activation layer as that of the Y component is used, the parameter configuration process of the first decoder network is simplifier.

Based on the foregoing descriptions, the residual activation unit further includes a group convolution layer, and a group quantity of the group convolution layer varies with a channel quantity of an input tensor of the group convolution layer.

Usually, an amount of data in one group that can be processed by hardware used to implement the group convolution layer is fixed. Therefore, in this embodiment of this application, the group quantity is set to vary with the channel quantity of the input tensor of the group convolution layer, so that the group quantity of the group convolution layer becomes different when the channel quantity of the input tensor becomes different. In this way, it can be ensured as much as possible that an amount of data in one group is maintained consistent with the amount of data in one group that can be processed by the hardware, and is well compatible with the hardware, a data processing delay is reduced, and a problem of a high data processing delay generated by incompatibility, with the hardware, caused when an amount of data in one group obtained by grouping data of the input tensor and the amount of data in one group that can be processed by the hardware are inconsistent in a case of a fixed group quantity is avoided.

In some embodiments, the group quantity is obtained by dividing the channel quantity of the input tensor of the group convolution layer by a target value, and the target value is an integer multiple of 16. For example, the target value is 16 or 32.

The amount of data in one group that can be processed by the hardware used to implement the group convolution layer is usually a multiple of 16, for example, 16 or 32. Therefore, in this embodiment of this application, the group quantity of the group convolution layer is set to be equal to the channel quantity of the input tensor divided by a multiple of 16. In this way, it can be ensured that the amount of data in one group is a multiple of 16, and therefore, is well compatible with the hardware, the data processing delay is reduced, and a problem of a high data processing delay generated by incompatibility, with the hardware, caused when an amount of data in one group obtained by grouping data of the input tensor is not a multiple of 16 in a case of a fixed group quantity is avoided.

Based on the foregoing descriptions, the first decoder network includes the first deconvolutional layer and the second deconvolutional layer, and structures of the first deconvolutional layer and the second deconvolutional layer each are a CONV-1 (4x4) structure. To be specific, both the first deconvolutional layer and the second deconvolutional layer are structures in which an input tensor is upsampled by two times. In this embodiment of this application, the first deconvolutional layer and the second deconvolutional layer may alternatively be replaced with another structure in which an input tensor can be upsampled by two times. Similarly, the first decoder network includes the first convolutional layer and the second convolutional layer, and structures of the first convolutional layer and the second convolutional layer each are a CONV (3x3) structure. To be specific, both the first convolutional layer and the second convolutional layer are structures in which an input tensor is maintained unchanged. In this embodiment of this application, the first convolutional layer and the second convolutional layer may alternatively be replaced with another structure in which an input tensor can be maintained unchanged.

When an input tensor of the first deconvolutional layer and an input tensor of the second deconvolutional layer are three-dimensional tensors, both the first deconvolutional layer and the second deconvolutional layer are of structures in which two dimensions, namely, a length and a width of an input tensor are upsampled by two times. Similarly, when the input tensor of the first convolutional layer and the input tensor of the second convolutional layer are three-dimensional tensors, both the first convolutional layer and the second convolutional layer are of structures in which two dimensions, namely, a length and a width of an input tensor are remained unchanged.

The following uses the following example to describe performance of the first decoder network provided in this embodiment of this application.

It is assumed that the channel quantity of the input tensor of the fourth subnetwork, the channel quantity of the input tensor of the third subnetwork, and the channel quantity of the input tensor of the second subnetwork that are included in the first decoder network provided in this embodiment of this application are shown in Table 1. In a case of four bitrate points, BD-Rate of an existing decoder network and the first decoder network in this embodiment of this application relative to a VVC encoding standard is shown in Table 3.

Table 3

| BD-Rate in a case of four bitrate points (0.06, 012, 0.25, and 0.5) | | | | | | | | | | |
|---|---|---|---|---|---|---|---|---|---|---|
| BD-Rate relative to a VVC encoding standard | | | | | | | | Monoto nicity | Max kMA C/Pxl | AVG kMA C/Pxl |
| Average distortion rate | MSSSIM | VIF | FSIM | NLPD | IW-SSIM | VMAF | PSNR -HSV | | | |
| -11.23% | -28.9% | -3.63% | -15.21% | -10.28% | -25.48% | -0.7% | 5.57% | Yes | 22.1 | 21.6 |
| -11.25% | -28.64% | -3.7% | -16.14% | -10.04% | -25.29% | -1.2% | 6.26% | Yes | 21.3 | 20.8 |

The first row of data in Table 3 shows a test status of the existing decoder network, and the second row of data shows a test status of the first decoder network provided in this embodiment of this application. Evaluation indicators considered in Table 3 include a multi-scale structural similarity (multiple-scale structural similarity, MSSSIM), visual information fidelity (visual quality fidelity, VIF), a feature similarity (feature similarity, FSIM), a normalization laplacian pyramid distance (normalization laplacian pyramid distance, NLPD), an information content weighted structural similarity (information content weighted SSIM, IW-SSIM), video multi-method assessment fusion (video multi-method assessment fusion, VMAF), a PSNR-human visual system (human visual system, HSV), monotonicity, a maximum multiply accumulate operation (multiply accumulate, MAC)/pixel (pixel), and an average MAC/pxl. The average distortion rate is determined based on values of the plurality of indicators of evaluating image reconstruction quality such as the MSSSIM, the VIF, the FSIM, the IW-SSIM, the VMAF, and the PSNR-HSV, and may reflect image reconstruction effect of the decoder network relative to a VVC method.

It can be learned from Table 3 that, compared with that of the existing decoder network, computational complexity of the first decoder network provided in this embodiment of this application is reduced, to be specific, both Max kMAC/Pxl and AVG kMAC/Pxl are reduced, and BD-Rate on a test image basically does not change clearly. In other words, the first decoder network provided in this embodiment of this application can reduce computational complexity, and exerts no clear impact on quality of the reconstructed image.

The first decoder network may be a standard decoder network, namely, a decoder network constructed based on a parameter released by an image encoding and decoding standard. In some embodiments, the decoder further includes a second decoder network, and the second decoder network is a user-defined decoder network, namely, a decoder network constructed based on a user-defined decoding rule. The second decoder network is configured to decode a feature map to obtain a reconstructed image, and the feature map is obtained by decoding a bitstream based on the hyper-decoder network and/or the context network included in the decoder. The hyper-decoder network and the context network may be standard networks, namely, networks constructed based on the parameter sent by the image encoding and decoding standard.

In other words, the decoder includes two decoder networks: a standard decoder network and a customized decoder network, and the two decoder networks share the standard hyper-decoder network and the context network. Certainly, the second decoder network may share one of the standard hyper-decoder network and the context network, and the other may be constructed based on a customized rule.

When the image encoding and decoding standard is released, a decoder side rule is usually released, and an encoder side rule can be implemented independently by a user. That is, a decoding rule on a decoder side and parameters of corresponding network models (for example, the hyper-decoder network, the decoder network, and the context network) are strictly released, and the encoder side rule is not strictly released. The user may use a customized encoder side rule, or may use an encoder side rule released by the standard. In this way, after the user performs image encoding based on a customized encoder side rule, it needs to be ensured that decoding can be successfully performed based on the standard decoder side rule.

Certainly, in some embodiments, the user may further customize the decoder side rule. In this way, after the user performs image encoding based on a standard encoder side rule, it needs to be ensured that decoding can be successfully performed based on the user-defined decoder side rule. In some other embodiments, to ensure optimal encoding and decoding performance, the user may further user-define the encoder side rule and the decoder side rule. In this way, after the user performs image encoding based on the customized encoder side rule, it needs to be ensured that decoding can be successfully performed based on the customized decoder side rule, and optimal encoding and decoding performance can be further achieved. However, in this case, it needs to be further ensured that another user can successfully perform decoding based on the standard decoder side rule.

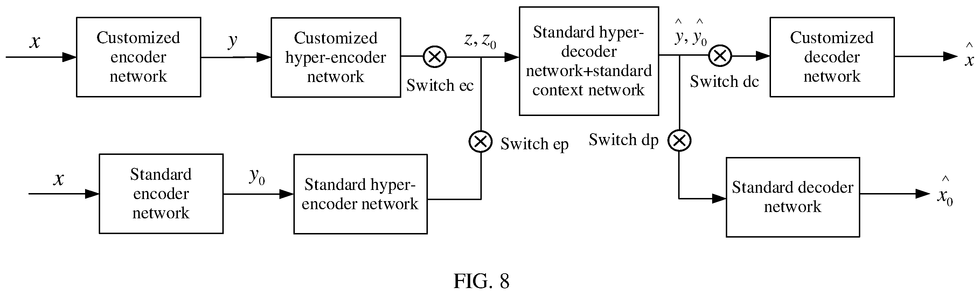

Based on the foregoing requirements, an embodiment of this application provides a multi-branch encoder and decoder network structure. As shown in FIG. 8, the multi-branch encoder and decoder network structure includes a customized encoder network, a customized hyper-encoder network, a standard encoder network, a standard hyper-encoder network, a standard hyper-decoder network, a standard context network, a customized decoder network, and a standard decoder network.

The customized encoder network, the customized hyper-encoder network, and the customized decoder network are networks constructed by a user based on a customized rule, and the standard encoder network, the standard hyper-encoder network, the standard hyper-decoder network, the standard context network, and the standard decoder network are networks constructed based on an image encoding and decoding standard.

A plurality of training manners compatible with the standard encoder network and the standard decoder network may be constructed based on the multi-branch encoder and decoder network structure, to train the customized encoder network, the customized hyper-encoder network, and the customized decoder network. In the following training manners, a network constructed based on a standard is a trained network. Therefore, a standard network may also be referred to as a pre-trained network.

**In a first training manner**, the customized decoder network is trained by combining the standard encoder network, the standard hyper-encoder network, the standard hyper-decoder network, the standard context network, and the customized decoder network. In other words, the foregoing decoder network is the customized decoder network, and the customized decoder network is obtained through training by combining the standard encoder network, the standard hyper-encoder network, the standard hyper-decoder network, and the standard context network.

In FIG. 8, there are four switches: a switch ec, a switch ep, a switch dc, and a switch dp. For the first training manner, the switch ep and the switch dc may be closed, and the switch ec and the switch dp may be opened. In other words, the switch ep=the switch dc=1, and the switch ec=the switch dp=0. In this way, the customized decoder network may be trained by combining the standard encoder network, the standard hyper-encoder network, the standard hyper-decoder network, the standard context network, and the customized decoder network, so that the user-defined decoder network can successfully decode a bitstream encoded based on a standard encoder side rule, thereby ensuring standard compatibility.

**In a second training manner**, the customized encoder network and the customized hyper-encoder network are trained by combining the standard hyper-decoder network, the standard context network, the standard decoder network, the customized encoder network, and the customized hyper-encoder network. In other words, the foregoing decoder network is the standard decoder network, and the standard decoder network is configured to train the customized encoder network and the customized hyper-encoder network by combining the standard hyper-decoder network, the standard context network, the customized encoder network, and the customized hyper-encoder network.

When there is a switch ec, a switch ep, a switch dc, and a switch dp in FIG. 8, for the second training manner, the switch ec and the switch dp may be closed, and the switch ep and the switch dc may be opened. In other words, the switch ep=the switch dc=0, and the switch ec=the switch dp=1. In this way, the customized encoder network and the customized hyper-encoder network may be trained by combining the standard hyper-decoder network, the standard context network, the standard decoder network, the customized encoder network, and the customized hyper-encoder network, so that the standard decoder network can successfully decode a bitstream encoded based on a customized encoder side rule, thereby ensuring standard compatibility.

**In a third training manner**, the customized decoder network, the customized encoder network, and the customized hyper-encoder network are trained by combining the standard encoder network, the standard hyper-encoder network, the standard hyper-decoder network, the standard context network, the customized encoder network, the customized hyper-encoder network, and the customized decoder network. In other words, the foregoing decoder network is the customized decoder network, and the customized decoder network is configured to train the customized decoder network, the customized encoder network, and the customized hyper-encoder network by combining the standard encoder network, the standard hyper-encoder network, the standard hyper-decoder network, the standard context network, the customized encoder network, and the customized hyper-encoder network.

When there is a switch ec, a switch ep, a switch dc, and a switch dp in FIG. 8, for the third training manner, the switch ep, the switch dc, and the switch ec may be closed, and the switch dp may be opened. In other words, the switch ep=the switch dc=the switch ec=1, and the switch dp=0. In this way, the customized decoder network, the customized encoder network, and the customized hyper-encoder network may be trained by combining the standard encoder network, the standard hyper-encoder network, the standard hyper-decoder network, the standard context network, the customized encoder network, the customized hyper-encoder network, and the customized decoder network, so that after a user performs image encoding based on a customized encoder side rule, the customized decoder network can successfully implement decoding, thereby achieving optimal encoding and decoding performance and ensuring standard compatibility. In addition, different user-defined encoder sides and decoder sides can perform mutual encoding and decoding.

**In a fourth training manner**, the customized decoder network, the customized encoder network, and the customized hyper-encoder network are trained by combining the standard encoder network, the standard hyper-encoder network, the standard hyper-decoder network, the standard context network, the standard decoder network, the customized encoder network, the customized hyper-encoder network, and the customized decoder network. In other words, the foregoing decoder network is a customized decoder network, and the customized decoder network is configured to train the customized decoder network, the customized encoder network, and the customized hyper-encoder network by combining the standard encoder network, the standard hyper-encoder network, the standard hyper-decoder network, the standard context network, the standard decoder network, the customized encoder network, and the customized hyper-encoder network.

When there is a switch ec, a switch ep, a switch dc, and a switch dp in FIG. 8, for the fourth training manner, the switch ep, the switch dc, the switch ec, and the switch dp may be closed. In other words, switch ep=switch dc=switch ec=switch dp=1. In this way, the customized decoder network, the customized encoder network, and the customized hyper-encoder network may be trained by combining the standard encoder network, the standard hyper-encoder network, the standard hyper-decoder network, the standard context network, the customized encoder network, the customized hyper-encoder network, the customized decoder network, and the standard decoder network, so that after a user performs image encoding based on a customized encoder side rule, the customized decoder network can successfully implement decoding, thereby achieving optimal encoding and decoding performance, further ensuring that another user can successfully implement decoding based on the standard decoder network, and ensuring standard compatibility. In addition, different user-defined encoder sides and decoder sides can perform mutual encoding and decoding.

**In a fifth training manner**, the customized decoder network, the customized encoder network, and the customized hyper-encoder network are trained by combining the standard hyper-decoder network, the standard context network, the standard decoder network, the customized encoder network, the customized hyper-encoder network, and the customized decoder network. In other words, the foregoing decoder network is the customized decoder network, and the customized decoder network is configured to train the customized decoder network, the customized encoder network, and the customized hyper-encoder network by combining the standard hyper-decoder network, the standard context network, the standard decoder network, the customized encoder network, and the customized hyper-encoder network.

When there is a switch ec, a switch ep, a switch dc, and a switch dp in FIG. 8, for the fifth training manner, the switch ec, the switch dc, and the switch dp may be closed, and the switch ep may be opened. In other words, the switch ec=the switch dc=the switch dp=1, and the switch ep=0. In this way, the customized decoder network, the customized encoder network, and the customized hyper-encoder network may be trained by combining the standard hyper-decoder network, the standard context network, the standard decoder network, the customized encoder network, the customized hyper-encoder network, and the customized decoder network, so that after a user performs image encoding based on a customized encoder side rule, the customized decoder network can successfully implement decoding, thereby achieving optimal encoding and decoding performance, further ensuring that another user can successfully implement decoding based on the standard decoder network, and ensuring standard compatibility. In addition, different user-defined encoder sides and decoder sides can perform mutual encoding and decoding.

The following describes, by using the following example, performance of an encoder and decoder network obtained by training the multi-branch encoder and decoder network structure provided in this embodiment of this application.

In a case of four bitrate points, BD-Rate of a plurality of types of encoding and decoding obtained by training the multi-branch encoder and decoder network structure provided in this embodiment of this application relative to a VVC encoding standard is shown in Table 4.

Table 4

| BD-Rate in a case of four bitrate points (0.06, 012, 0.25, and 0.5) | | | | | | | | | | |
|---|---|---|---|---|---|---|---|---|---|---|
| BD-Rate relative to a VVC encoding standard | | | | | | | | Monotonicity | Max kMAC/Pxl | AVG kMAC/Pxl |
| Average distortion rate | MSSSIM | VIF | FSIM | NLPD | IW-SSIM | VMAF | PSNR-HSV | | | |
| -11.23% | -28.9% | -3.63% | -15.21% | -10.28% | -25.48% | -0.7% | 5.57% | Yes | 22.1 | 21.6 |
| -11.11% | -28.83% | -3.35% | -15.08% | -10.20% | -25.45% | -0.7% | 5.83% | Yes | 22.1 | 21.6 |
| -10.78% | -28.46% | -2.9% | -15.24% | -9.81% | -25.07% | -0.2% | 6.21% | Yes | 21.3 | 20.8 |
| -1.2% | -22.91% | 11.75% | -9.29% | -1.4% | -18.98% | 12.87% | 19.43% | Yes | 8.5 | 8.4 |
| -11.21% | -28.85% | -3.6% | -15.06% | -10.22% | -25.49% | -0.9% | 5.62% | Yes | 22.1 | 21.6 |
| -9.91% | -27.92% | -2.1% | -13.89% | -9.38% | -24.63% | 1.8% | 6.8% | Yes | 22.1 | 21.6 |
| -11.06% | -28.78% | -3.31% | -14.84% | -10.11% | -25.45% | -0.9% | 5.91% | Yes | 22.1 | 21.6 |
| -1.2% | -22.93% | 11.78 | -9.11% | -1.4% | -19.01% | 12.71% | 19.43% | Yes | 8.5 | 8.4 |

(continued)

| BD-Rate in a case of four bitrate points (0.06, 012, 0.25, and 0.5) | | | | | | | | | | |
| BD-Rate relative to a VVC encoding standard | | | | | | | | Monot onicity | Max kMA C/Pxl | AVG kMA C/Pxl |
| Average distortion rate | MSSSIM | VIF | FSIM | NLPD | IW-SSIM | VMAF | PSNR-HSV | | | |
| -0.4% | -22.29% | 12.6% | -8.25% | -0.9% | -18.49% | 14.86% | 19.99% | Yes | 8.5 | 8.4 |

The first row of data in Table 4 shows a test status of an existing decoder network; the second row of data, the third row of data, and the fourth row of data show test statuses obtained by training the customized decoder network in the first training manner, and model complexity of customized decoder networks corresponding to the three rows of data is reduced sequentially; the fifth row of data and the sixth row of data show test statuses obtained by training the customized encoder network in the second training manner, and model complexity of customized encoder networks corresponding to the two rows of data is reduced sequentially; and the seventh row of data, the eighth row of data, and the ninth row of data show test statuses obtained by combining the customized decoder network obtained in the first training manner and the customized encoder network obtained in the second training manner. In addition, the seventh row and the second row correspond to a same customized decoder network, the seventh row and the fifth row correspond to a same customized encoder network, the eighth row and the fourth row correspond to a same customized decoder network, the eighth row and the fifth row correspond to a same customized encoder network, the ninth row and the fourth row correspond to a same customized decoder network, and the ninth row and the sixth row correspond to a same customized encoder network.

The first row of data in Table 4 is used as baseline data. It can be learned from the second row of data, the third row of data, and the fourth row of data in Table 4 that, in comparison with the baseline data, after the customized decoder network is trained in the first training manner, computational complexity of the customized decoder network is basically reduced, that is, the Max kMAC/Pxl and the AVG kMAC/Pxl are basically reduced, and the BD-Rate on a test image is reduced to a limited extent. In other words, after the customized decoder network is trained in the method provided in this embodiment of this application, computational complexity can be basically reduced, and quality of a reconstructed image is reduced to a limited extent. A structure of the customized decoder network corresponding to the fourth row is very simple. Therefore, it is normal that the average distortion rate decreases greatly.

Similarly, it can be learned from the fifth row of data and the sixth row of data in Table 4 that, in comparison with the baseline data, after the customized encoder network is trained in the second training manner, the computational complexity of decoding performed through the decoder network does not change greatly, that is, the Max kMAC/Pxl and the AVG kMAC/Pxl basically do not change greatly, and BD-Rate on a test image is reduced to a limited extent. In other words, after the customized encoder network is trained in the method provided in this embodiment of this application, computational complexity of decoding data encoded by the customized encoder network basically remains unchanged, and quality of the reconstructed image is reduced to a limited extent.

Similarly, it can be learned from the seventh row of data, the eighth row of data, and the ninth row of data in Table 4 that, in comparison with the baseline data, after the customized decoder network obtained in the first training manner and the customized encoder network obtained in the second training manner are combined, computational complexity of encoding is basically reduced, that is, the Max kMAC/Pxl and the AVG kMAC/Pxl are basically reduced, and BD-Rate on the test image is reduced to a limited extent. In other words, after the customized encoder network and the customized decoder network are obtained through training in the method provided in this embodiment of this application, computational complexity can be basically reduced, and quality of a reconstructed image is reduced to a limited extent. Network structures corresponding to the last two rows are simple. Therefore, it is normal that the average distortion rate decreases greatly.

After training is performed in the foregoing joint training manner, both an encoder and a decoder may be set to be of a multi-branch structure. To be specific, the encoder includes two encoder networks: a standard encoder network and a customized encoder network, and the decoder includes two decoder networks: a standard decoder network and a customized decoder network. When the encoder performs image encoding, one of the encoder networks may be selected for encoding, and when the decoder performs image decoding, one of the decoder networks may be selected for decoding. The following describes in detail a method of performing image encoding/decoding by using an encoder/decoder.

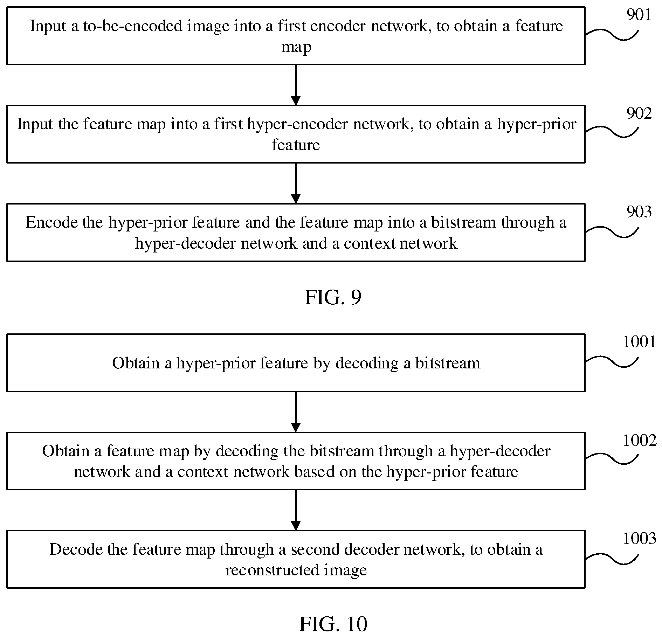

FIG. 9 is a flowchart of an image encoding method according to an embodiment of this application. The method is applied to an encoder. The encoder includes a first encoder network, a second encoder network, a first hyper-encoder network, a hyper-decoder network, and a context network. The method includes the following steps.

**Step 901:** Input a to-be-encoded image into the first encoder network, to obtain a feature map.

The first encoder network is a customized encoder network, and the second encoder network is a pre-trained encoder network. In other words, the second encoder network is a standard encoder network. Certainly, in some other embodiments, two encoder networks included in a multi-branch encoder may be both customized encoder networks of different structures. This is not limited in this embodiment of this application.

Because the encoder includes the two encoder networks, when the encoder performs image encoding, different encoder networks may be selected according to different requirements for encoding. In this way, flexibility is higher, and better encoding performance can be achieved.

**Step 902:** Input the feature map into the first hyper-encoder network, to obtain a hyper-prior feature.

The first hyper-encoder network is a customized hyper-encoder network. In some embodiments, the encoder further includes a second hyper-encoder network, and a pre-trained hyper-encoder network of the second hyper-encoder network. In other words, the second hyper-encoder network is a standard hyper-encoder network.

Certainly, in some other embodiments, two hyper-encoder networks included in a multi-branch encoder may be both customized hyper-encoder networks of different structures. This is not limited in this embodiment of this application.

Because the encoder includes the two hyper-encoder networks, when the encoder performs image encoding, different hyper-encoder networks may be selected according to different requirements for encoding. In this way, flexibility is higher, and better encoding performance can be achieved.

**Step 903:** Encode the hyper-prior feature and the feature map into a bitstream through the hyper-decoder network and the context network.

The bitstream is used to be decoded by a decoder, the decoder includes the hyper-decoder network, the context network, and a first decoder network, and the first decoder network is the first decoder network included in the decoder described above.

For related technical details in the foregoing encoding method, refer to the foregoing AI encoder model or JPEG AI encoder model. Details are not described herein again.

Because the first encoder network is a customized encoder network, the first decoder network is a standard decoder network, the decoder further includes a second decoder network, and the second decoder network is a customized decoder network. After image encoding is performed through the first encoder network, the bitstream may be decoded by the first decoder network, or may be decoded by the second decoder network. When the bitstream is decoded by the first decoder network, the standard decoder network can successfully decode a bitstream obtained through encoding by the customized encoder network. This ensures compatibility of an image encoding and decoding standard. When the bitstream is decoded by the second decoder network, the customized decoder network can successfully decode a bitstream obtained through encoding by the customized encoder network. This achieves optimal encoding and decoding performance.

FIG. 10 is a flowchart of an image decoding method according to an embodiment of this application. The method is applied to the foregoing decoder. The encoder includes a first decoder network, a second decoder network, a hyper-decoder network, and a context network. The method includes the following steps.

**Step 1001:** Obtain a hyper-prior feature by decoding a bitstream.

The bitstream may be a bitstream obtained through encoding through a customized encoder network, or may be a bitstream obtained through encoding through a standard encoder network. This is not limited in this embodiment of this application.

**Step 1002**: Obtain a feature map by decoding the bitstream through the hyper-decoder network and the context network based on the hyper-prior feature.

**Step 1003:** Decode the feature map through the second decoder network, to obtain a reconstructed image.

The first decoder network is a pre-trained decoder network. To be specific, the first decoder network is a standard decoder network, and the second decoder network is a customized decoder network. Certainly, in some other embodiments, two decoder networks included in a multi-branch encoder may be both customized decoder networks of different structures. This is not limited in this embodiment of this application.

Because the decoder includes the two decoder networks, when the decoder performs image decoding, different decoder networks may be selected according to different requirements for decoding. In this way, flexibility is higher, and better decoding performance can be achieved.

When the bitstream is obtained through encoding by the standard encoder network and the second decoder network is a customized decoder network, compatibility of the customized decoder network with the standard decoder network can be achieved. When the bitstream is obtained through encoding through the customized encoder network and the second decoder network is a customized decoder network, encoding and decoding processes can meet a user requirement, and optimal encoding and decoding performance can be achieved.

For related technical details in the foregoing decoding method, refer to the foregoing AI decoder model or JPEG AI decoder model. Details are not described herein again.

Because the second decoder network is a customized decoder network, the bitstream may be a bitstream obtained through encoding by a customized encoder network, or may be a bitstream obtained through encoding by a standard encoder network. If the bitstream is a bitstream obtained through encoding by the standard encoder network, after the second decoder network performs decoding, a customized decoder network can successfully decode the bitstream obtained by the standard encoder network. This ensures compatibility of an image encoding and decoding standard. If the bitstream is a bitstream obtained through encoding by the customized encoder network, after the second decoder network performs decoding, the customized decoder network can successfully decode the bitstream obtained through encoding by the customized encoder network. This achieves optimal encoding and decoding performance.

With reference to the foregoing descriptions, the encoder and the decoder each include a hyper-decoder network and a context network. When the encoder and the decoder are located in a same device, the device may include only one hyper-decoder network and one context network. In this case, the encoder and the decoder share the hyper-decoder network and the context network. Certainly, a plurality of hyper-decoder networks and a plurality of context networks may alternatively be included. In this case, respective hyper-decoder networks and context networks are used for the encoder and the decoder. Regardless of how the hyper-decoder network and the context network are deployed, the hyper-decoder network and the context network used for the encoder and the decoder are pre-trained networks, that is, networks constructed based on a parameter specified in a standard.

An embodiment of this application further provides an encoder. The encoder includes a first encoder network, a second encoder network, a first hyper-encoder network, a hyper-decoder network, and a context network, the first encoder network is configured to determine a feature map of a to-be-encoded image, the first hyper-encoder network is configured to determine a hyper-prior feature based on the feature map, and the hyper-decoder network and the context network are configured to encode the hyper-prior feature and the feature map into a bitstream.

The bitstream is used to be decoded by a decoder, the decoder includes the hyper-decoder network, the context network, and a first decoder network, and the first decoder network is the first decoder network included in the foregoing decoder.

Optionally, the second encoder network is a pre-trained encoder network.

Optionally, the encoder further includes a second hyper-encoder network, and the second hyper-encoder network is a pre-trained hyper-encoder network.

An embodiment of this application further provides an image encoding apparatus. The image encoding apparatus has a function of implementing a behavior of the image encoding method shown in FIG. 9. The image encoding apparatus includes at least one module. The at least one module is configured to implement the image encoding method.

An embodiment of this application further provides an image decoding apparatus. The image decoding apparatus has a function of implementing a behavior of the image decoding method shown in FIG. 10. The image decoding apparatus includes at least one module. The at least one module is configured to implement the foregoing image decoding method.

An embodiment of this application further provides a computer-readable storage medium. The storage medium stores instructions. When the instructions run on a computer, the computer is enabled to perform the steps of the image encoding method in FIG. 9 or the steps of the image decoding method in FIG. 10. Alternatively, the computer-readable storage medium stores a bitstream obtained by one or more processors by performing the method in FIG. 9.

An embodiment of this application further provides a computer program product including instructions. When the instructions run on a computer, the computer is enabled to perform the steps of the image encoding method in FIG. 9 or the steps of the image decoding method in FIG. 10. In other words, a computer program is provided. When the computer program runs on a computer, the computer is enabled to perform the steps of the image encoding method in FIG. 9 or the steps of the image decoding method in FIG. 10.

An embodiment of this application further provides an encoding and decoding system. The encoding and decoding system includes the foregoing decoder and/or the foregoing encoder.

An embodiment of this application further provides a bitstream storage device, including at least one storage medium and a communication interface. The communication interface is configured to receive or send a bitstream. The at least one storage medium is configured to store the bitstream. The bitstream is obtained by an encoder through encoding in the method in FIG. 9.

An embodiment of this application further provides a bitstream storage method, including: receiving a bitstream through a communication interface; and storing the bitstream in one or more storage media. The bitstream is obtained by an encoder through encoding in the method in FIG. 9.

An embodiment of this application further provides a bitstream distribution system, including at least one storage medium and a video stream device. The at least one storage medium is configured to store a bitstream. The bitstream is obtained by an encoder through encoding in the method in FIG. 9. The video stream device is configured to respond to a request of a decoder, so that the bitstream in the at least one storage medium is sent to the decoder.

An embodiment of this application further provides a bitstream distribution method, including: receiving a first request; selecting a bitstream from at least one storage medium in response to the first request; and sending the bitstream to a destination device. The at least one storage medium is configured to store the bitstream. The bitstream is obtained by an encoder through encoding in the method in FIG. 9.

An embodiment of this application further provides a bitstream processing system, including an image source device, an encoder, one or more storage media, and a destination device. The image source device is configured to provide image data. The encoder is configured to: obtain the image data of the image source device through an interface, and encode the image data to obtain one or more bitstreams. The bitstream is obtained by the encoder through encoding in the method in FIG. 9. The encoder is configured to store the one or more bitstreams in the one or more storage media; or the encoder is configured to encapsulate the one or more bitstreams to obtain a transmission bitstream. The encoder is configured to transmit the transmission bitstream to the destination device through a communication link or a communication network. The destination device is configured to decapsulate the transmission bitstream to obtain the one or more bitstreams. The destination device is configured to decode the one or more bitstreams to obtain decoded data.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium that can be accessed by the computer, or a data storage device like a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A decoder, wherein the decoder comprises a first decoder network, a hyper-decoder network, and a context network, the first decoder network comprises a first subnetwork, a second subnetwork, a third subnetwork, and a fourth subnetwork that are sequentially connected from an input to an output, a channel quantity of an input tensor of the fourth subnetwork is greater than a channel quantity of an input tensor of the third subnetwork, and the channel quantity of the input tensor of the fourth subnetwork is greater than a channel quantity of an input tensor of the second subnetwork.

2. The decoder according to claim 1, wherein the first decoder network is configured to decode data of a Y component, the channel quantity of the input tensor of the fourth subnetwork is 96, and the channel quantity of the input tensor of the third subnetwork and the channel quantity of the input tensor of the second subnetwork each are 64.

3. The decoder according to claim 1, wherein the first decoder network is configured to decode data of UV components, the channel quantity of the input tensor of the fourth subnetwork is 128, and the channel quantity of the input tensor of the third subnetwork and the channel quantity of the input tensor of the second subnetwork each are 64.

4. The decoder according to claim 1, wherein the first decoder network is configured to decode data of UV components, the channel quantity of the input tensor of the fourth subnetwork is 96, and the channel quantity of the input tensor of the third subnetwork and the channel quantity of the input tensor of the second subnetwork each are 64.

5. The decoder according to any one of claims 1 to 4, wherein at least two of the first subnetwork, the second subnetwork, and the third subnetwork comprise a residual activation unit, the residual activation unit comprises an activation layer, and activation layers in the at least two subnetworks are different.

6. The decoder according to claim 5, wherein the first decoder network is configured to decode data of a Y component, the first subnetwork, the second subnetwork, and the third subnetwork each comprise the residual activation unit, an activation layer in the first subnetwork is a leaky rectified linear unit LeakyReLU, and an activation layer in the second subnetwork and an activation layer in the third subnetwork each are a parametric rectified linear unit PReLU.

7. The decoder according to claim 5, wherein the first decoder network is configured to decode data of UV components, the second subnetwork and the third subnetwork each comprise the residual activation unit, an activation layer in the second subnetwork is a rectified linear unit ReLU, and an activation layer in the third subnetwork is a leaky rectified linear unit LeakyReLU.

8. The decoder according to any one of claims 1 to 4, wherein if the first decoder network is configured to decode the data of the Y component, the first subnetwork, the second subnetwork, and the third subnetwork each comprise a residual activation unit; or if the first decoder network is configured to decode the data of the UV components, the second subnetwork and the third subnetwork each comprise the residual activation unit; and
the residual activation unit comprises an activation layer, and an activation layer in the second subnetwork and an activation layer in the third subnetwork are the same, but are different from an activation layer in the first subnetwork.

9. The decoder according to claim 8, wherein the activation layer in the first subnetwork is a leaky rectified linear unit LeakyReLU, and the activation layer in the second subnetwork and the activation layer in the third subnetwork each are a parametric rectified linear unit PReLU.

10. The decoder according to any one of claims 4 to 9, wherein the residual activation unit further comprises a group convolution layer, and a group quantity of the group convolution layer varies with a channel quantity of an input tensor of the group convolution layer.

11. The decoder according to claim 10, wherein the group quantity is obtained by dividing the channel quantity of the input tensor of the group convolution layer by a target value, and the target value is an integer multiple of 16.

12. The decoder according to claim 11, wherein the target value is 16 or 32.

13. The decoder according to any one of claims 1 to 12, wherein the decoder further comprises a second decoder network, the second decoder network is configured to decode a feature map to obtain a reconstructed image, and the feature map is obtained by decoding a bitstream based on the hyper-decoder network and/or the context network.

14. An encoder, wherein the encoder comprises a first encoder network, a second encoder network, a first hyper-encoder network, a hyper-decoder network, and a context network, the first encoder network is configured to determine a feature map of a to-be-encoded image, the first hyper-encoder network is configured to determine a hyper-prior feature based on the feature map, and the hyper-decoder network and the context network are configured to encode the hyper-prior feature and the feature map into a bitstream; and
the bitstream is used to be decoded by a decoder, the decoder comprises the hyper-decoder network, the context network, and a first decoder network, and the first decoder network is the first decoder network comprised in the decoder according to any one of claims 1 to 13.

15. The encoder according to claim 14, wherein the second encoder network is a pre-trained encoder network.

16. The encoder according to claim 14, wherein the encoder further comprises a second hyper-encoder network, and the second hyper-encoder network is a pre-trained hyper-encoder network.

17. An image encoding method, applied to an encoder, wherein the encoder comprises a first encoder network, a second encoder network, a first hyper-encoder network, a hyper-decoder network, and a context network, and the method comprises:

inputting a to-be-encoded image into the first encoder network, to obtain a feature map;

inputting the feature map into the first hyper-encoder network, to obtain a hyper-prior feature; and

encoding the hyper-prior feature and the feature map into a bitstream through the hyper-decoder network and the context network, wherein

the bitstream is used to be decoded by a decoder, the decoder comprises the hyper-decoder network, the context network, and a first decoder network, and the first decoder network is the first decoder network comprised in the decoder according to any one of claims 1 to 13.

18. The method according to claim 17, wherein the second encoder network is a pre-trained encoder network.

19. The method according to claim 17, wherein the encoder further comprises a second hyper-encoder network, and the second hyper-encoder network is a pre-trained hyper-encoder network.

20. An image decoding method, applied to the decoder according to any one of claims 1 to 13, wherein the decoder comprises the first decoder network, the second decoder network, the hyper-decoder network, and the context network, and the method comprises:

obtaining a hyper-prior feature by decoding a bitstream;

obtaining a feature map by decoding the bitstream through the hyper-decoder network and the context network based on the hyper-prior feature; and

decoding the feature map through the second decoder network, to obtain a reconstructed image.

21. The method according to claim 20, wherein the first decoder network is a pre-trained decoder network.

22. A computer-readable storage medium, wherein the computer-readable storage medium stores a bitstream obtained by one or more processors by performing the method according to any one of claims 17 to 19.

23. An encoding and decoding system, wherein the encoding and decoding system comprises the decoder according to any one of claims 1 to 13, and/or the encoder according to any one of claims 14 to 16.

24. A bitstream storage device, comprising at least one storage medium and a communication interface, wherein

the communication interface is configured to receive or send a bitstream;

the at least one storage medium is configured to store the bitstream; and

the bitstream is obtained by an encoder through encoding in the method according to any one of claims 17 to 19.

25. A bitstream storage method, comprising:

receiving a bitstream through a communication interface; and

storing the bitstream in one or more storage media, wherein the bitstream is obtained by an encoder through encoding in the method according to any one of claims 17 to 19.

26. A bitstream distribution system, comprising at least one storage medium and a video stream device, wherein

the at least one storage medium is configured to store a bitstream, wherein the bitstream is obtained by an encoder through encoding in the method according to any one of claims 17 to 19; and

the video stream device is configured to respond to a request of a decoder, so that a bitstream in the at least one storage medium is sent to the decoder.

27. A bitstream distribution method, comprising:

receiving a first request;

selecting a bitstream from at least one storage medium in response to the first request; and

sending the bitstream to a destination device, wherein

the at least one storage medium is configured to store the bitstream, wherein the bitstream is obtained by an encoder through encoding in the method according to any one of claims 17 to 19.

28. A bitstream processing system, comprising an image source device, an encoder, one or more storage media, and a destination device, wherein

the image source device is configured to provide image data;
the encoder is configured to: obtain the image data of the image source device through an interface, and encode the image data to obtain one or more bitstreams, wherein the bitstream is obtained by the encoder through encoding in the method according to any one of claims 17 to 19;
the encoder is configured to store the one or more bitstreams in the one or more storage media; or
the encoder is configured to encapsulate the one or more bitstreams, to obtain a transmission bitstream;
the encoder is configured to transmit the transmission bitstream to the destination device through a communication link or a communication network;
the destination device is configured to decapsulate the transmission bitstream, to obtain the one or more bitstreams; and
the destination device is configured to decode the one or more bitstreams, to obtain decoded data.

FIG. 1

FIG. 2

FIG. 3

FIG. 4

FIG. 5

FIG. 6

FIG. 7

FIG. 8

| Input a to-be-encoded image into a first encoder network, to obtain a feature map | 901 |

↓

| Input the feature map into a first hyper-encoder network, to obtain a hyper-prior feature | 902 |

↓

| Encode the hyper-prior feature and the feature map into a bitstream through a hyper-decoder network and a context network | 903 |

## FIG. 9

| Obtain a hyper-prior feature by decoding a bitstream | 1001 |

↓

| Obtain a feature map by decoding the bitstream through a hyper-decoder network and a context network based on the hyper-prior feature | 1002 |

↓

| Decode the feature map through a second decoder network, to obtain a reconstructed image | 1003 |

## FIG. 10

## INTERNATIONAL SEARCH REPORT

| | International application No. |
|---|---|
| | **PCT/CN2024/126316** |

**A. CLASSIFICATION OF SUBJECT MATTER**

H04N19/42(2014.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, ENTXT, DWPI, IEEE, CNKI, JVET: 视频, 编码, 解码, 图像, 图象, 图片, 超编码, 超解码, 残差, 激活, 卷积, 通道, 张量, 矩阵, 子网络, 分组, 第一, 第二, 第三, 第四, 颜色, 分离, video, encode, decode, image, picture, hyper, esidual, activate, convolution, channel, tensor, matrix, subnetwork, packet, first, second, third, fourth, color, separate, CCS, ReLU, PReLU, LeakyReLU

**C. DOCUMENTS CONSIDERED TO BE RELEVANT**

| Category* | Citation of document, with indication, where appropriate, of the relevant passages | Relevant to claim No. |
|---|---|---|
| X | WO 2023177318 A1 (HUAWEI TECHNOLOGIES CO., LTD. et al.) 21 September 2023 (2023-09-21)<br>description, paragraphs 50-52, 168-248, and 290-319, and figures 1-19 | 1-4, 9, 22-28 |
| Y | WO 2023177318 A1 (HUAWEI TECHNOLOGIES CO., LTD. et al.) 21 September 2023 (2023-09-21)<br>ditto | 13-21 |
| Y | JIA, Panqi et al. "Learning-Based Conditional Image Coder Using Color Separation"<br>*arXiv*, 12 December 2022 (2022-12-12),<br>abstract, text, sections 1-3, and figures 1-2 | 13-21 |
| X | WO 2023177319 A1 (HUAWEI TECHNOLOGIES CO., LTD. et al.) 21 September 2023 (2023-09-21)<br>description, paragraphs 180-248 and 290-320, and figures 1-19 | 1-4, 9, 22-28 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 January 2025** | **22 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/126316** |

| C. | DOCUMENTS CONSIDERED TO BE RELEVANT | |
|---|---|---|
| Category* | Citation of document, with indication, where appropriate, of the relevant passages | Relevant to claim No. |
| Y | WO 2023177319 A1 (HUAWEI TECHNOLOGIES CO., LTD. et al.) 21 September 2023 (2023-09-21) ditto | 13-21 |
| A | CN 112771541 A (GOOGLE INC.) 07 May 2021 (2021-05-07) entire document | 1-28 |
| A | CN 116584098 A (DIPU RENDE TECHNOLOGY CO., LTD.) 11 August 2023 (2023-08-11) entire document | 1-28 |

Form PCT/ISA/210 (second sheet) (July 2022)

**INTERNATIONAL SEARCH REPORT**
**Information on patent family members**

International application No.

**PCT/CN2024/126316**

| Patent document cited in search report | | | Publication date (day/month/year) | Patent family member(s) | | | Publication date (day/month/year) |
|---|---|---|---|---|---|---|---|
| WO | 2023177318 | A1 | 21 September 2023 | EP | 4449312 | A1 | 23 October 2024 |
| WO | 2023177319 | A1 | 21 September 2023 | TW | 202345034 | A | 16 November 2023 |
| | | | | WO | 2023177319 | A8 | 08 August 2024 |
| | | | | EP | 4449309 | A1 | 23 October 2024 |
| | | | | KR | 20240129013 | A | 27 August 2024 |
| CN | 112771541 | A | 07 May 2021 | WO | 2020068498 | A1 | 02 April 2020 |
| | | | | EP | 3841528 | A1 | 30 June 2021 |
| | | | | EP | 3841528 | B1 | 17 July 2024 |
| | | | | US | 2024104786 | A1 | 28 March 2024 |
| | | | | US | 12154304 | B2 | 26 November 2024 |
| | | | | US | 2021358180 | A1 | 18 November 2021 |
| | | | | US | 11869221 | B2 | 09 January 2024 |
| CN | 116584098 | A | 11 August 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311395694